# EUROPÄISCHE PATENTSCHRIFT

(11) **EP 0 416 136 B1**
(45) Veröffentlichungstag und Bekanntmachung des Hinweises auf die Patenterteilung: **16.06.1993**
(21) Anmeldenummer: 88890258.2
(22) Anmeldetag: 14.10.1988
(51) Int. Cl.: B60M 1/28

(54) **Gleisverfahrbare Maschine zum Verlegen des Fahrdrahtes und/oder des Tragseiles einer Gleis-Oberleitung**
Track-borne machine for installing the transport wire and/or the supporting cable of a track overhead line
Machine circulant sur voie pour la pose d'un fil de trolley et/ou d'un câble porteur d'un catenaire de voie

(43) Veröffentlichungstag der Anmeldung: 13.03.1991
(60) Teilanmeldung: 91113765.1
(73) Patentinhaber: Franz Plasser Bahnbaumaschinen- Industriegesellschaft m.b.H., 1010 Wien (AT)
(72) Erfinder: Theurer, Josef, A-1010 Wien (AT); Oellerer, Friedrich, A-4040 Linz (AT); Gruber, Leopold Rudolf, A-3270 Scheibbs (AT)

(56) Entgegenhaltungen:
- DE-A- 2 012 248
- DE-C- 526 889
- FR-A- 2 129 540

## Beschreibung

Die Erfindung betrifft eine gleisverfahrbare Maschine zum kontinuierlich strecken- bzw. abschnittsweisen Verlegen des Fahrdrahtes und/oder des Tragseiles einer Oberleitung eines Gleises, mit einem auf Schienenfahrwerken gelagerten und über einen auf die Verlegegeschwindigkeit abstellbaren Fahrantrieb verfahrbaren Maschinenrahmen, einer Fahrkabine und einer über einen Antrieb höhenverstellbaren Arbeitsbühne sowie einer Speicher-Draht- oder Seil-Trommel, einer dieser vorgeordneten und über einen Antrieb und eine Steuereinrichtung beaufschlagbaren Zugspannungs-Vorrichtung - der wenigstens eine Führungs-Rolle zugeordnet ist - und einer, über Antriebe höhenverstellbaren und einen verschwenkbaren Ausleger-Arm zur Höhen- und Seitenverstellung einer Stütz- und Führungs-Rolle aufweisenden, Hub-Vorrichtung.

Es ist - gemäß Buch von I.I. Wlassow "Fahrleitungsnetz", Fachbuchverlag Leipzig 1955, Seiten 214 bis 226 - eine aus einem Tragseil und einem Fahrdraht bestehende Oberleitung oberhalb einer Schienenstrecke in der Weise zu verlegen, daß zunächst das Tragseil mit einem Ende festgelegt und dann über an den Befestigungsstellen angeordnete Montagerollen geführt wird. Zur Verlegung wird ein Montage-Schienenfahrzeug verwendet, welches das Tragseil enthaltende Trommeln trägt, die drehbar gelagert und mit Trommelbremsen versehen sind. Nach Verlegung eines Tragseilabschnittes wird dieses Tragseil mit einem Flaschenzug gespannt und mit seinem Ende an einer Endstruktur befestigt. Anschließend werden Hängeseile verlegt, und es wird der Fahrdraht in gleicher Weise verlegt und am Tragseil mit Hilfe von Hilfshängeseilen aufgehängt. Darauf wird der Fahrdraht mit Hilfe eines oder mehrerer Flaschenzüge gespannt und befestigt, und es wird dann der Fahrdraht an den endgültigen Hängeseilen befestigt. Die Verlegung einer Oberleitung in dieser Weise erfordert einen erheblichen Arbeitsaufwand. Das Abrollen bzw. die Aufnahme des Tragseiles und des Fahrdrahtes auf den vorgesehenen Trommeln ist, bedingt durch die nicht-parallele Lage des Drahtes bzw. des Seiles zur Gleisachse, relativ schwierig und nur mit großem Zeitaufwand durchführbar, um ein einwandfreies Ablaufen von der Trommel bis zur endgültigen Lage des Seiles und des Drahtes herstellen zu können.

Es ist auch - gemäß Zeitschrift "Japanese Railway Engineering", Band 9, 1968, Seiten 23 bis 25 - ein Inspektionswagen zur Inspektion und zur Reparatur von Fahrdrähten bekannt, auf dem Trommeln mit dem Fahrdraht drehbar gelagert sind, die mit Hilfe von Öldruckbremsen gebremst werden können, so daß der Fahrdraht unter Spannung verlegt werden kann. Mit diesem Inspektionswagen wird nicht eine Neuverlegung einer gesamten, aus Tragseil und Fahrdraht bestehenden Oberleitung durchgeführt, sondern nur ein abgenutzter Fahrdraht durch einen neuen Fahrdraht bei bereits vorhandenem Tragseil mit den vorhandenen Hängeseilen ersetzt. Mit diesem Inspektionswagen ist ebenso eine rasche und genaue Verlegung des Fahrdrahtes und/oder des Tragseiles - auf Grund der zick-zack-förmigen bzw. beschriebenen nicht-parallelen Lage des Drahtes zur Gleisachse - nicht möglich.

Es ist ferner - gemäß DE-PS 526 889 - eine Einrichtung zur Verlegung einer Fahrleitung für elektrische Eisenbahnen bekannt in Form eines Schienenfahrzeuges, auf dem mehrere Drahttrommeln gelagert sind und ein Hubarm - zum Anheben der von den Trommeln ablaufenden Drähte auf die Höhe der oberhalb der Schienen befindlichen Befestigungshaken - angeordnet ist. Mit dieser Einrichtung werden mehrere Fahrdrähte gleichzeitig verlegt, wobei aber die einzelnen Drähte nicht miteinander verbunden sind. Ein genauer Ablauf von den Drahttrommeln ist auf Grund der zu dieser bzw. zur Gleisachse nicht genau parallelen Lage der Drähte ebenso schwierig und ungenau und erfordert einen hohen Zeitaufwand.

Schließlich ist - gemäß DE-PS 22 11 247 - eine Maschine zum "vorläufigen" Installieren einer Oberleitung oberhalb einer Schienenstrecke mit einem Schienenfahrzeug in der eingangs beschriebenen Art bekannt. Auf diesem selbstverfahrbaren Schienenfahrzeug sind hiebei folgende Vorrichtungen angeordnet: Trommel zum Speichern des Tragseiles und des Fahrdrahtes und zu deren Ausgabe mit gesteuerter Zugkraft, eine Hakensuchvorrichtung, eine Zugspannungs-Steuervorrichtung mit Antrieb zur Aufbringung der Längszugkraft, eine Vorrichtung zum Abgeben der Drahthänger, eine in Abhängigkeit von einem Tastsignal arbeitende Draht-Aufhängevorrichtung zum Aufhängen des Tragseiles und Einhängen in den Haken sowie eine Verankerungsvorrichtung für das andere Ende des Fahrdrahtes bzw. des Tragseiles. Mit der zwischen den Drahttrommeln und dem oberen Bereich des Fahrdrahtes und des Tragseiles dazwischengeschalteten, als Hubarm ausgebildeten und über einen Antrieb höhenverstellbaren Hubvorrichtung wird über einen mit zwei in Maschinenlängsrichtung im Abstand auf einem Tragarm angeordneten und mit relativ kleinem Durchmesser ausgebildeten Tragseil-Führungsrollen der Draht und das Seil gehoben und abgestützt, um über eine Führungsrolle mit ebenso kleinem Durchmesser über die Zugspannungs-Steuervorrichtung bis zu den Trommeln geführt zu werden. - Diese bekannte Maschine ist im Aufbau relativ aufwendig, um ein vorläufiges bzw. provisorisches Verlegen des Fahrdrahtes und des Tragseiles unter Spannung durchführen zu können. Auch mit diesen Vorrichtungen ist ein genauer Ablauf der Drähte von der Trommel und auch von der Zugspannungs-Steuervorrichtung und den Führungsrollen schon auf Grund der nicht-parallelen bzw. endgültigen Lage des Fahrleitungsdrahtes und des Tragseiles zu diesen Vorrichtungen (zick-zack-Verlegung) nicht möglich und dadurch auch keine genaue Verlegung sowohl für die Endlage als auch für eine gewünschte rasche Montage erzielbar. Darüberhinaus ist der Abstand von der Hubvorrichtung bis zu den Drahttrommeln in Maschinenlängsrichtung relativ groß, wodurch eine relativ große Endlänge der zu verlegenden Drähte bzw. Seile bzw. lange Anschluß-Verbindungsdrähte in nachteiliger Weise erforderlich sind. - Es ist insbesondere ein sehr aufwendiger, komplizierter Mechanismus dieser bekannten Maschine, nämlich die Hakensuchvorrichtung einerseits und die Vorrichtung zum Abgeben der provisorischen Hänger in Verbindung mit der Draht-Aufhängevorrichtung andererseits, erforderlich - um überhaupt einigermaßen das Nachführen des mit den Führungsrollen ausgestatteten höhen- und seitenverschwenkbaren Tragarmes auf der höhenverstellbaren Arbeitsbühne entsprechend dem wechselnden Richtungsverlauf eines von Mast zu Mast zu verlegenden Drahtes- und das nur provisorisch - zu ermöglichen. Das Aufhängen des gespannten Seiles erfolgt mit dieser Vorrichtung über die zwei im Abstand voneinander angeordneten Führungsrollen, welche mit ihrem Tragarm hochgefahren werden und wobei der dazwischen befindliche Seilabschnitt auf dem provisorischen Haken aufgehängt wird. Diese provisorische Verlegung ist sehr unwirtschaftlich und in der Durchführung sehr aufwendig und umständlich, und weiters sind nach diesem vorläufigen Installieren der Oberleitung die provisorischen Hänger in einer neuerlichen Arbeitsfahrt zu entfernen, um die für Dauer vorgesehenen Befestigungsmittel im Zuge einer neuerlichen Spannung und Ausrichtung des Fahrdrahtes montieren zu können.

Die Aufgabe der Erfindung besteht nun darin, eine Maschine der eingangs beschriebenen Art zu schaffen, die im Aufbau und in der Handhabung einfach ist und mit welcher insbesondere ein einfacherer Verlegevorgang des Tragseiles und/oder des Fahrdrahtes einer Oberleitung unter hoher Zugspannung erzielbar ist.

Diese Aufgabe wird mit einer gleisverfahrbaren Maschine der eingangs beschriebenen Art dadurch gelöst, daß die, die Stütz-bzw. Führungs-Rolle und den Ausleger-Arm aufweisende Hub-Vorrichtung mit der, der Speicher-Trommel zugeordneten Zugspannungs-Vorrichtung mit Führungs-Rolle - zur kontinuierlichen Halterung und Spannung des Fahrdrahtes und/oder des Tragseiles in einer gewünschten gleichbleibenden Höhen- bzw. Soll-Lage - für eine gleichzeitige, endgültige Höhen-Distanzierung, mit durch eine Bedienungsperson auf der Arbeitsbühne erfolgender - Befestigung des Fahrdrahtes und/oder des Tragseiles an dem jeweiligen Fahrleitungsmast - ausgebildet ist.

Eine mit diesen erfindungsgemäßen Merkmalen ausgebildete Maschine ist im Aufbau und Betrieb einfach und sicher und gewährleistet ein einfaches, genaues und rasches Verlegen oder Auswechseln dieser Drähte bzw. Seile einer Oberleitung in die gewünschte Soll-Lage mit hoher Verlegegenauigkeit. Die Bedienungsperson muß keine schwierigen, zeitaufwendigen Zentrier- oder Haltevorgänge bzw. Zustellbewegungen in Bezug zu den Fahrdrähten oder Tragseilen durchführen, sondern diese lediglich in der bereits vorhandenen richtigen gespannten Soll-Lage am Mast bzw. zueinander mit den Befestigungselementen befestigen.

Mit der vorliegenden Erfindung ist insbesondere die Möglichkeit gegeben, eine Maschine zu schaffen, mit der es insbesondere erstmals möglich ist, im sofortigen Anschluß an eine gemeinsame Abwicklung des Tragseiles und Fahrdrahtes - im gleichen Arbeitsgang - auch deren endgültige Befestigung an den mit den Fahrleitungsmasten verbundenen Auslegern und die erforderliche gemeinsame Verbindung zwischen Tragseil und Fahrdraht durchzuführen, so daß nach dem Einsatz der Maschine unter Vermeidung weiterer aufwendiger Arbeitsgänge und Maschineneinsätze bereits eine fertig gespannte und montierte Oberleitung vorliegt. Die Ausbildung der Stütz- und Führungs-Rolle sowie der Zugspannungs-Vorrichtung und der Führungs-Rolle für eine kontinuierliche Halterung und Spannung des Fahrdrahtes und bzw. oder des Tragseiles in der Soll-Lage hat den besonderen Vorteil, daß mit lediglich geringem konstruktiven Aufwand in Verbindung mit der kontinuierlichen Abwicklung von den Trommeln gleichzeitig auch die insbesondere für den Fahrdraht vorgeschriebene sehr hohe Spannung ohne Unterbrechung auf das Tragseil oder den Fahrdraht aufbringbar ist. Die kontinuierliche Halterung von Tragseil und/oder Fahrdraht in der Soll-Höhenlage ermöglicht unter Vermeidung umständlicher und zeitaufwendiger Manipulationen mit komplizierten Konstruktionen eine rasche und problemlose einfachste Zentrierung zum zick-zack-förmigen Seitenverlauf, durch einfache seitliche Verschwenkung der Stütz- und Führungs-Rollen - unter unveränderter Beibehaltung der eingestellten Soll-Höhenlage. Die Maschine zeichnet sich durch hohe Wirtschaftlichkeit aus und ist auch für den Abbau eines auszuwechselnden Fahrdrahtes oder Tragseiles in gleicher vorteilhafter Weise einsetzbar.

Nach einer besonders vorteilhaften Weiterbildung der Erfindung ist sowohl die mit dem Ausleger-Arm verbundene Stütz- und Führungs-Rolle als auch die der Zugspannungs-Vorrichtung zugeordnete und als Umlenkrolle ausgebildete Führungs-Rolle für einen - von der insbesondere seitlichen Verschwenkung der Hub-Vorrichtung unabhängigen - immer im wesentlichen senkrechten Auf- bzw. Ablauf des Tragseiles oder Fahrdrahtes in bezug auf ihre Dreh-Rollen-Achse angeordnet. Mit einer solchen Maßnahme bzw. Anordnung der Stütz- und Führungs-Rolle sowie der der Zugspannungs-Vorrichtung zugeordneten Umlenkrolle ist zuverlässig sichergestellt, daß trotz der sehr hohen Zugspannung das Tragseil oder der Fahrdraht auch bei einer seitlichen Verschwenkung der Stütz- und Führungs-Rolle - gemäß dem zick-zack-förmigen Seitenverlauf der Oberleitung - mit hoher Genauigkeit von der Rolle abrollbar bzw. auf dieser aufrollbar ist.

Nach einer besonders vorteilhaften Ausbildung der Erfindung ist die Stütz- und Führungs-Rolle für eine kontinuierliche Halterung, Führung und Umlenkung des Fahrdrahtes oder des Tragseiles in die gleichbleibende Höhen- bzw. Soll-Lage über die Antriebe der Hub-Vorrichtung beaufschlagbar und insbesondere bei dem zick-zack-förmigen Seitenverlauf des Drahtes oder Seiles - zur im wesentlichen selbsttätigen Zentrierung bzw. Ausrichtung in Seil- bzw. Draht-Längsrichtung - am Ausleger-Arm verschwenkbar, insbesondere um eine vertikale Achse gelagert. Mit den Antrieben der Hub-Vorrichtung ist die Stütz- und Führungs-Rolle in die genaue Höhen- bzw. Soll-Lage verstell- und in dieser auch haltbar, wobei durch die schwenkbare Lagerung am Ausleger-Arm bei besonders einfacher konstruktiver Ausbildung eine selbsttätige Zentrierung bzw. Ausrichtung in Seil- bzw. Draht-Längsrichtung erzielbar ist. Die verschwenkbare Lagerung der Rolle um eine vertikale Achse gewährleistet insbesondere den Vorteil einer einfachen, robusten und sicheren Nachführung bzw. Zentrierung auf den seitlichen, links oder rechts abweichenden zick-zack-Verlauf des Fahrdrahtes oder des Tragseiles.

Eine bevorzugte Ausbildung nach der Erfindung besteht darin, daß die - der Draht- bzw. Seil-Trommel und der Zugspannungs-Vorrichtung vor- bzw. zugeordnete Umlenkrolle im Bereich unterhalb der Stütz- und Führungs-Rolle vorgesehen und auf einer quer zu ihrer Umlenkrollen-Achse in Maschinenlängsrichtung verlaufenden Achse am Maschinenrahmen verschwenkbar gelagert ist. Diese Anordnung der Umlenkrolle unterhalb der Stütz- und Führungs-Rolle ermöglicht eine besonders kurze Längenausbildung der gesamten Maschine. Die verschwenkbare Lagerung der Umlenkrolle am Maschinenrahmen gestattet eine sichere und problemlose Anpassung des Seil- oder Draht-Ablaufes an die seitliche Verschwenkung der vorgeordneten Stütz- und Führungs-Rolle.

Eine vorteilhafte Ausbildung besteht darin, daß die, insbesondere jeweils mit einer Führungs-Rille ausgebildete Stütz- und Führungs-Rolle und Draht- bzw. Seil-Umlenkrolle in ihrem Durchmesser vorzugsweise gleich groß und für eine Umlenkung um wenigstens 90° der relativ biegesteifen Drähte, je nach Draht-Querschnittsbemessung, mit einem Mindest-Durchmesser, vorzugsweise wenigstens 1 m, ausgebildet sind. Mit einer solchen Stütz-und Führungs-Rolle sowie der der Zugspannungs-Vorrichtung vorgeordneten Umlenkrolle ist unter Vermeidung einer zu hohen Biegebeanspruchung des Fahrdrahtes oder Tragseiles eine genaue und sichere Führung in einem relativ langen Umlenkbereich der Führungs-Rille gewährleistet bzw. erst eine störungsfreie Umlenkung derartiger biegesteifer Drähte erzielbar.

Gemäß einer besonders vorteilhaften und einfachen Ausbildung der Erfindung ist lediglich eine Stütz- und Führungs-Rolle für den Fahrdraht oder für das Tragseil vorgesehen, die gemeinsam mit ihrer Rollen-Achse an einem, mit dem Ausleger-Arm über das lediglich die vertikale Achse aufweisende Gelenk verschwenkbar verbundenen Tragglied zur im wesentlichen selbsttätigen Zentrierung bzw. Einstellung auf die Soll-Lage zum Draht- bzw. Seil-Richtungsverlauf gelagert ist. Die Lagerung nur einer Stütz- und Führungs-Rolle ermöglicht eine besonders einfache und den sehr hohen Zugkräften bestens standhaltende Verbindung mit dem Ausleger-Arm. Durch das lediglich um die vertikale Achse verschwenkbare Tragglied ist bei selbsttätiger Anpassungsmöglichkeit an den zick-zack-förmigen Seitenverlauf eine genaue zwangsläufige, der Verstellung des Ausleger-Armes entsprechende Höhenverstellung in die gewünschte Soll-Lage gewährleistet.

Die Stütz- und Führungsrolle ist gemäß einer besonders vorteilhaften Ausbildung der Erfindung mit ihrer Rollen-Achse am Endbereich des mit dem Ausleger-Arm über die vertikale Achse verdrehbaren Traggliedes zur allseitigen Verschwenkbarkeit zusätzlich um eine senkrecht bzw. zur Draht- bzw. Seil-Richtung im wesentlichen parallel verlaufende Schwenkachse über eine Rollen-Halterung drehbar gelagert. Diese im Aufbau sehr einfache Lagerung der Stütz- und Führungs-Rolle ermöglicht durch die zusätzliche Schwenkachse kontinuierlich eine von der seitlichen Verschwenkung des Ausleger-Armes im wesentlichen unabhängigen senkrechten Auflauf des Tragseiles oder Fahrdrahtes zur Rollen-Achse, so daß ein Herausspringen des gespannten Seiles bzw. Drahtes aus der Führungs-Rille zuverlässig ausgeschlossen wird.

Eine konstruktiv einfache und zweckmäßige Weiterbildung wird nach der Erfindung dadurch erzielt, daß die Draht- bzw. Seil-Umlenkrolle mit einer zweiten in Maschinenlängsrichtung dahinter angeordneten, vorzugsweise durch einen Kettenantrieb mit dieser drehverbundenen Umlenkrolle - die mit ihrer Umlenkrollen-Achse um die gleiche in Maschinenlängsrichtung verlaufende Achse verschwenkbar ist - die, eine als Zugspannungs-Vorrichtung ausgebildete, Seilwinde bildet, und daß beide Umlenkrollen zur mehrfachen Umwicklung durch das Tragseil bzw. den Fahrdraht zur meßbaren Erstellung eines entsprechenden Zugspannungs-Drehmomentes ausgebildet sind. Eine derartige aus einer Seilwinde gebildete Zugspannungs-Vorrichtung ermöglicht unter konstruktiv relativ einfacher, robuster Ausbildung die Übertragung relativ hoher Bremskräfte zur Erzeugung einer gleichmäßig hohen Zugspannung des Tragseiles oder Fahrdrahtes. Durch die verschwenkbare Lagerung beider mit dem Kettenantrieb gleichmäßig drehbaren Umlenkrollen ist - unabhängig von der jeweiligen Schwenklage - eine ungestörte und problemfreie Umwicklung für das entsprechende Zugspannungs-Drehmoment erzielbar.

Eine besonders konstruktiv einfache und vorteilhafte Weiterbildung der Erfindung besteht darin, daß die beiden, die Seilwinde bildenden Draht- bzw. Seil-Umlenkrollen mit ihren Umlenkrollen-Achsen gemeinsam mit der parallel zur Umlenkrollen-Achse querverschiebbaren Seil- bzw. Draht-Trommel auf einem wippenartigen - vorzugsweise in der seitlichen Drehbewegung durch Feder- bzw. Anschlagglieder begrenzten - Trägerrahmen gelagert sind, der um die in Maschinenlängsrichtung verlaufende Achse drehbar am Maschinenrahmen gelagert ist. Mit Hilfe dieses am Maschinenrahmen verschwenkbaren Trägerrahmens sind in vorteilhafter Weise die beiden Umlenkrollen sowie die nachgeordnete Trommel gemeinsam verschwenkbar. Dabei ist in einfachster Weise durch die schwenkbare Lagerung des Trägerrahmens eine Neigungsänderung der Trommel und der Umlenkrollen-Achsen zur Anpassung an den zufolge der unterschiedlichen Seitenlage der Stütz- und Führungs-Rollen geänderten Ablauf des Seiles bzw. Drahtes erzielbar. Die Querverschiebbarkeit der Trommel sichert ein problemloses genaues Ab- bzw. Aufrollen des Fahrdrahtes oder Tragseiles in Verbindung mit der Verschwenkbarkeit.

Weitere Vorteile werden durch eine erfindungsgemäße Ausbildung dadurch erzielt, daß die vorzugsweise mit einem Dreh-Antrieb - für den Einsatz beim Abtragen des Drahtes oder Seiles - beaufschlagbare Draht- bzw. Seil-Trommel mit einem am Trägerrahmen angeordneten Antrieb zur Verschiebung quer zur Maschinenlängsrichtung verbunden ist. Der Anlauf des von der Seilwinde ablaufenden Fahrdrahtes bzw. Tragseiles auf die Trommel erfolgt hiedurch immer an derselben Stelle sowie senkrecht zur Umlenkrollen-Achse, wodurch auch ein gleichmäßiger, störungsfreier Umlauf der Seilwinde gewährleistet ist. Der mit der Trommel verbundene Drehantrieb sichert ein störungsfreies Aufrollen beim Abbau des Fahrdrahtes oder Tragseiles.

Nach einer besonders bevorzugten und vorteilhaften Weiterbildung der Erfindung ist zur kontinuierlich fortlaufenden Halterung und Spannung des Fahrdrahtes und Tragseiles in der Soll-Lage jeweils eine, mit dem seiten- und höhenverschwenkbaren Ausleger-Arm der Hub-Vorrichtung verbundene und über das Gelenk gemeinsam verschwenkbare Stütz- und Führungs-Rolle für den Fahrdraht und das Tragseil vorgesehen, wobei zwei Trägerrahmen angeordnet sind, die jeweils mit einer Draht- bzw. Seil-Trommel für den Fahrdraht bzw. das Tragseil und einer eigenen Seilwinde bzw. Zugspannungs-Vorrichtung verbunden sind. Diese im Aufbau sehr einfache und vorteilhafte Lösung ermöglicht die gleichzeitige Verlegung eines Tragseiles und eines Fahrdrahtes - durch ein praktisch störungsfreies bzw. problemloses Abrollen des Fahrdrahtes und des Tragseiles unter hoher Spannung in die Soll-Lage - ohne gegenseitige störende Einflußnahme sowie unter voller Aufrechterhaltung zweier verschiedener, auf Tragseil bzw. Fahrdraht abgestimmte Zugspannungen. Mit dieser erfindungsgemäßen Ausbildung kann insbesondere nach dem Einsatz der Maschine - bei gleichzeitiger Abwicklung des Fahrdrahtes und des Tragseiles und Befestigung derselben an den jeweiligen Fahrleitungsmasten im gleichen Arbeitsgang - in sehr rascher und wirtschaftlicher Weise eine endgültig fertig montierte Oberleitung mit gespanntem Fahrdraht und gespanntem Tragseil erstellt werden. Die Maschine zeichnet sich durch hohe Wirtschaftlichkeit aus und ist auch für den Abbau eines auszuwechselnden Fahrdrahtes und/oder Tragseiles in gleicher vorteilhafter Weise einsetzbar.

Nach einer besonders vorteilhaften zweckmäßigen Ausbildung der Erfindung sind die beiden Stütz- und Führungs-Rollen im vertikalen, der Soll-Lage zwischen Fahrdraht und Tragseil entsprechenden Abstand zueinander auf dem gemeinsamen, mit dem Ausleger-Arm über das Gelenk verschwenkbaren Tragglied angeordnet und jeweils voneinander unabhängig mit ihren Rollen-Achsen um eine zusätzliche, zu einer durch den Draht und Seil-Richtungs-Verlauf führenden Ebene, parallel verlaufenden Schwenk-Achse über eine Rollen-Halterung zur Selbst-Zentrierung bzw. Einstellung drehbar gelagert. Durch diese relativ einfache Ausbildung und Lagerung auf einem gemeinsamen Tragglied ist - unabhängig von der jeweiligen Seitenlage entsprechend dem zick-zack-Verlauf der Oberleitung-automatisch immer eine zueinander senkrechte Anordnung bzw. Anpassung an den Abstand des Fahrdrahtes bzw. Tragseiles der beiden Stütz- und Führungs-Rollen gewährleistet.

Nach einer besonders vorteilhaften Ausbildung der Erfindung ist eine Stütz- und Führungs-Rolle - vorzugsweise die für den Fahrdraht - zur anderen Stütz- und Führungs-Rolle für eine wahlweise andere gewünschte Soll-Lage, vorzugsweise über einen mit einem Hebelgestänge verbundenen Antrieb im Abstand zueinander ein-bzw. verstellbar am gemeinsamen Tragglied gelagert. Mit Hilfe dieser Ausbildung ist ohne Unterbrechung der kontinuierlichen Maschinenvorfahrt bzw. des Arbeitsablaufes eine z.B. bei Tunnels od.dgl. erforderliche Absenkung der Soll-Höhenlage des Tragseiles bei unveränderter Soll-Höhenlage des Fahrdrahtes insbesondere durch Fernsteuerung des Antriebes durchführbar.

Die zur Spannung bzw. Führung des Fahrdrahtes vorgesehene Stütz- und Führungs-Rolle ist entsprechend einer anderen vorteilhaften Weiterbildung der Erfindung in Arbeitsrichtung der Maschine der Stütz- und Führungs-Rolle für das Tragseil nachgeordnet. Diese Anordnung ermöglicht einen gegenseitig ungehinderten und störungsfreien Betrieb. Weiters ist auch eine ungehinderte Höhenverstellung der zur Führung des Fahrdrahtes vorgesehenen Stütz- und Führungs-Rolle ohne nachteilige Beeinflussung der vorgeordneten Stütz- und Führungs-Rolle für das Tragseil bzw. auch dessen zur Rolle führenden Abschnittes möglich.

Eine besonders bevorzugte, vorteilhafte Weiterbildung nach der Erfindung besteht darin, daß die höhenverstellbare Hub-Vorrichtung mit dem über Antriebe höhen - und seitenverschwenkbaren Ausleger-Arm vorzugsweise als ein über Antriebe höhen- und in Maschinenlängsrichtung über Antriebe teleskopartig verstellbarer Schwenk-Kran ausgebildet und in Arbeitsrichtung der Maschine vor den beiden Trägerrahmen mit den Seil- bzw. Draht-Trommeln und den Seilwinden am Maschinenrahmen angeordnet ist und über die Antriebe mit beiden Stütz- und Führungs-Rollen in Maschinenlängsrichtung wenigstens bis etwa oberhalb des Mittelbereiches zwischen den beiden Trägerrahmen verstellbar ausgebildet ist. Diese im Aufbau sehr einfache, sichere und zweckmäßige Lösung ermöglicht eine rasche und problemlose Plazierung der Stütz- und Führungs-Rollen in den für den jeweiligen Arbeitsbereich jeweils günstigsten Längsbereichen der Maschine sowie auch eine störungsfreie Seitenverschwenkung für den zick-zack-förmigen Verlauf der Oberleitung, wobei durch die vorkragende Ausbildung als Schwenk-Kran eine störende Beeinflussung der Tragseil- und Fahrdraht-Abwicklung zuverlässig ausgeschlossen ist.

Nach einer konstruktiv besonders zweckmäßigen und vorteilhaften Erfindungs-Ausbildung ist insbesondere jeder wippenartige, am Maschinenrahmen gelagerte Trägerrahmen für den Fahrdraht und das Tragseil im wesentlichen aus einem zur Lagerung der Trommel vorgesehenen, unten offenen Rahmenteil und einem an diesen anschließenden, zur Lagerung der Seilwinde vorgesehenen Mittel-Träger gebildet, wobei die beiden Trägerrahmen mit ihrem Mittel-Träger in Maschinenlängsrichtung hintereinander angeordnet sind und wobei vorzugsweise im Mittelbereich derselben am Maschinenrahmen eine Draht- bzw. Seil-Reserve-Trommel vorgesehen ist. Eine solche Ausbildung des Trägerrahmens gestattet eine möglichst tiefe Lagerung der Trommel teilweise im unten offenen Rahmenteil, so daß die Drehachsen der Seilwinde und der Trommel in einer gemeinsamen horizontalen Ebene vorzugsweise in der Schwenkachse des Trägerrahmens für ein einfacheres Kippen desselben zu liegen kommen. Durch die Anordnung der Trägerrahmen hintereinander ist eine ungehinderte Manipulation der Trommeln für deren raschen Ersatz durch die in unmittelbarer Nähe gelagerten Reserve-Trommeln mit dem Schwenk-Kran durchführbar.

Eine besonders bevorzugte Ausbildung nach der Erfindung besteht darin, daß im Bereich von der Seilwinde und der zugeordneten Stütz- und Führungs-Rolle jeweils ein am Fahrdraht bzw. am Tragseil anliegender, gegebenenfalls mit einem Wegmesser verbundener Spannungsprüfer zur Aufrechterhaltung bzw. meßbaren Feststellung einer konstanten bzw. wahlweisen Seil- bzw. Drahtspannung vorgesehen ist, der mit der zentralen Steuereinrichtung sowie dem jeweiligen Seilwinden-Antrieb verbunden ist. Durch die Anordnung eines Spannungsprüfers ist eine von der Vorfahrgeschwindigkeit der Maschine weitgehend unabhängige konstante Zugspannung des abgewickelten Fahrdrahtes bzw. Tragseiles für dessen sofortige Endbefestigung nach der Umlenkung um die Stütz-und Führungs-Rolle erzielbar. Mit der Anordnung zwischen der Stütz- und Führungs-Rolle und der Seilwinde ist ohne nachteilige Beeinflussung des Spannungsprüfers eine ungehinderte seitliche Verschwenkung der Stütz- und Führungs-Rollen für den zick-zack-förmigen Verlauf der Oberleitung durchführbar.

Eine baulich besonders vorteilhafte Weiterbildung der Erfindung besteht darin, daß die insbesondere als seitenverstellbarer Schwenk-Kran ausgebildete und mit einem Höhenmeß- und Anzeigeorgan verbundene Hub-Vorrichtung - im Bereich des einen Maschinenrahmen-Endes - unmittelbar hinter der Fahrkabine angeordnet und die, als über Antriebe höhenverstell- und seitenverschwenkbare Bediener-Kabine bzw. Fahrkorb ausgebildete Arbeitsbühne im Bereich des anderen Maschinenrahmen-Endes, vorzugsweise neben einer Material-Lagerstelle, angeordnet ist. Mit dieser jeweils endseitigen Anordnung des Schwenk-Kranes am einen und der Bediener-Kabine am gegenüberliegenden Maschinenende ist unter Vermeidung einer gegenseitigen störenden Einflußnahme eine genaue und übersichtliche Beobachtung der Stütz- und Führungs-Rollen durch die in der zu diesem Zweck auch höhen- und seitenverstellbaren Bediener-Kabine befindliche Bedienungsperson möglich. Mit dem Höhenmeßorgan ist eine exakte Höheneinstellung der Stütz- und Führungs-Rollen - insbesondere über Fernsteuerung durch die Bedienungsperson - für eine Umlenkung des Tragseiles bzw. Fahrdrahtes in der genauen gewünschten Soll-Höhenlage durchführbar.

Gemäß einer weiteren vorteilhaften Ausbildung der Erfindung sind sämtliche Antriebe durch die vorzugsweise eine digitale Zugkraft-Anzeige aufweisende zentrale Steuereinrichtung fernsteuerbar, die in dem über die Antriebe höhenverstell- und seitenverschwenkbaren Bediener-Fahr-Korb vorgesehen ist. Mit einer solchen Steuereinrichtung sind die verschiedenen Antriebe in vorteilhafter Weise vom eine gute Arbeits-Übersicht bietenden Bediener-Fahr-Korb aus, entsprechend den Erfordernissen insbesondere hinsichtlich des zick-zack-förmigen Seitenverlaufes der Oberleitung, fernbetätigbar. Mit Hilfe der Zugkraft-Anzeige besteht für die Bedienungsperson jederzeit die Möglichkeit, bei Über- bzw. Unterschreitung der gewünschten Zugkraft sofort korrigierend einzugreifen.

Eine vorteilhafte Weiterbildung und Anordnung der Erfindung ist dadurch gekennzeichnet, daß ein insbesondere selbstverfahrbarer Gleis-Oberbau- oder Turmwagen mit höhenverstellbarem Arbeitsgerüst zum Abbau oder Aufbau bzw. Lagerung für den gespannten Fahrdraht und/oder das gespannte Tragseil zueinander verbindenden bzw. stützenden Einzelteile bzw. der Teile für die Befestigung der mit den jeweiligen Masten verbundenen Ausleger der Maschine nachgeordnet ist. Eine solche Kombination mit der erfindungsgemäß ausgebildeten Maschine ermöglicht in vorteilhafter Weise gleichzeitig in Verbindung mit der Abwicklung des Tragseiles und Fahrdrahtes unter vorgegebener Zugspannung und Soll-Lage auch die abschließende Montage mit den Auslegern und auch die Anbringung von gespanntes Drahtseil und gespannten Fahrdraht miteinander verbindenden Einzelteile im gleichen Arbeitsgang.

Eine besonders vorteilhafte Weiterbildung und Anordnung nach der Erfindung besteht darin, daß zum Umbau von Oberleitungen der zum Verlegen bzw. Aufnehmen des Fahrdrahtes und des Tragseiles ausgebildeten Maschine eine vorzugsweise gleichartig ausgebildete Maschine in Arbeitsrichtung vorgeordnet und in Bezug zur Arbeitsrichtung spiegelbildlich zu dieser im Abstand angeordnet ist, wobei jede Maschine mit wenigstens einem Arbeitsfahrzeug mit einer in Maschinenlängsrichtung über jeweils einen Antrieb längsverschieb- und höhenverstellbaren Arbeitsplattform verbunden ist. Mit diesem aus zwei erfindungsgemäßen Maschinen sowie wenigstens zwei Arbeitsfahrzeugen gebildeten Oberleitungs-Umbauzug ist mit lediglich geringem personellen Aufwand eine komplette Demontage der alten und anschließende Montage der neuen Oberleitung im Rahmen eines besonders wirtschaftlichen kontinuierlichen Arbeitseinsatzes durchführbar. Auf den längs- und höhenverstellbaren Arbeitsplattformen sind in ausreichendem Zeitmaß alle erforderlichen Befestigungs- und Demontage-Arbeiten ausführbar, wobei weitgehend unabhängig von der kontinuierlichen Maschinenvorfahrt zusätzlich auch verschiedene andere Arbeiten ausführbar sind, die im Zuge einer kompletten Auswechslung für eine endgültig fertigerstellte Oberleitung anfallen.

Die Erfindung betrifft auch ein vorteilhaftes Verfahren zur kontinuierlichen Verlegung einer Oberleitung unter Befestigung auf mit Fahrleitungsmasten verbundenen Auslegern, wobei Tragseil und Fahrdraht von Speicher-Trommeln abgewickelt und unter Aufbringung einer gewünschten Zugkraft mit Hilfe einer Zugspannungs-Vorrichtung um Stütz- und Führungs-Rollen gespannt werden. Das erfindungsgemäße Verfahren ist dadurch gekennzeichnet, daß das Tragseil und der Fahrdraht unter Spannung mit Hilfe der höhen- und seitenverstellbaren Stütz- und Führungs-Rollen kontinuierlich in ihre jeweilige Soll-Höhen- und Seiten-Lage gebracht, in dieser unter Spannung gehalten und mit dem Ausleger für eine endgültige Fixierung verbunden werden, wonach die Stütz- und Führungs-Rollen unter unveränderter Beibehaltung ihrer Höhenlage und kontinuierlicher Weiterfahrt der Maschine seitlich entsprechend dem zick-zack-förmigen Verlauf der Oberleitung verschwenkt bzw. auf diesen Verlauf zentriert werden und wobei im gleichen Arbeitsgang der gespannte Fahrdraht mit dem gespannten Tragseil mit Hilfe eines mit der Maschine gegebenenfalls gekuppelten Arbeitswagens durch die Einzel-Befestigungselemente zueinander in dieser Soll-Lage endgültig montiert werden. Mit diesen Verfahrensschritten ist erstmals unter lediglich geringem Arbeitsaufwand eine komplett abgeschlossene bzw. endgültige Befestigung der gesamten Oberleitung in der vorgeschriebenen höhen- und seitenmäßigen Soll-Lage im Rahmen eines besonders wirtschaftlichen kontinuierlichen Arbeitseinsatzes durchführbar. Dabei ist von besonderem Vorteil, daß der gesamte Arbeitsablauf - beginnend von der Seil- bzw. Draht-Abwicklung bis zur abschließenden Befestigung des Tragseiles am Ausleger und Fixierung der Einzel-Befestigungselemente zwischen Tragseil und Fahrdraht - sozusagen in einem ununterbrochenen Arbeitsfluß mit organisatorisch und leistungsmäßig genau aufeinander abstimmbaren Arbeitseinsätzen ausführbar ist. Da der Fahrdraht und das Tragseil mit der erforderlichen, oft sehr unterschiedlichen Zugspannung kontinuierlich in der gewünschten Soll-Höhen- und Seiten-Lage abgewickelt werden, ist eine besonders einfache, rasche und vor allem endgültige Befestigung an den Auslegern möglich.

Im folgenden wird die Erfindung an Hand zweier in der Zeichnung dargestellter Ausführungsbeispiele und einiger Detail-Varianten näher beschrieben.

Es zeigen:
Fig.1 eine Seitenansicht einer erfindungsgemäß ausgebildeten Maschine zum kontinuierlich strecken- bzw. abschnittsweisen Verlegen oder Aufnehmen des Fahrdrahtes und/oder Tragseiles einer Oberleitung - in einer Stellung unmittelbar nach einem Fahrleitungsmast beim Verlegevorgang - mit einem in Arbeitsrichtung nachfolgenden Gleis-Oberbau- oder Turmwagen,
Fig.2 eine Draufsicht auf die Maschine gemäß Fig.1, jedoch zum besseren Verständnis mit den Draht- bzw. Seil-Trommeln in einer Mittel-Stellung und ohne die in Fig.5 dargestellten Stütz- und Führungs-Rollen,
Fig.3 eine vergrößerte Draufsicht auf eine von zwei als Seilwinde ausgebildeten Zugspannungs-Vorrichtungen - in Verlegestellung - und die beiden mit einer Hub-Vorrichtung verbundenen Stütz- und Führungs-Rollen,
Fig.4 einen vergrößerten Querschnitt durch die Maschine in der obenbeschriebenen Stellung gemäß den Linien IV-IV in Fig.2,
Fig.5 eine vergrößerte Draufsicht auf die beiden Stütz- und Führungs-Rollen in einer Mittel-Stellung nach Fig.2,
Fig.6 ein Ausführungsbeispiel von, mit einer Hub-Vorrichtung verbundenen Stütz- und Führungs-Rollen zur Umlenkung des Tragseiles bzw. Fahrdrahtes in die Soll-Höhenlage,
Fig.7 ein anderes schematisch dargestelltes Ausführungsbeispiel von über einen Antrieb gegeneinander verstellbaren Stütz- und Führungs-Rollen, die mit der als Schwenk-Kran ausgebildeten Hub-Vorrichtung verbunden sind und
Fig.8 eine schematisch dargestellte Seitenansicht zweier erfindungsgemäß ausgebildeter und jeweils mit Arbeitsfahrzeugen verbundener Maschinen zur kontinuierlichen Demontage und Aufwickeln einer alten und Abwickeln und endgültiger Montage einer neuen Gleis-Oberleitung.

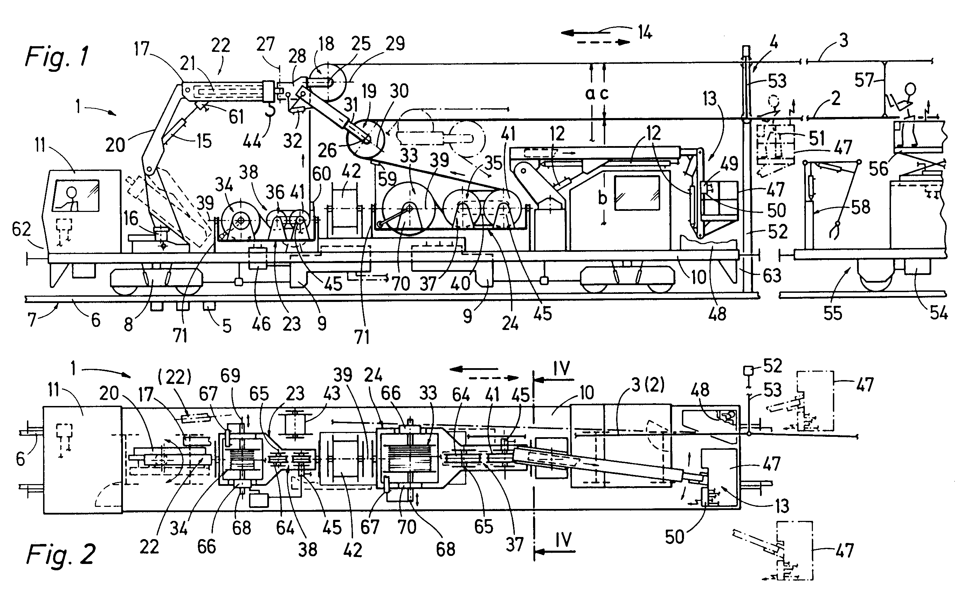

Eine in Fig.1 und 2 dargestellte Maschine 1 zum kontinuierlichen strecken- bzw. abschnittsweisen Verlegen oder Aufnehmen eines Fahrdrahtes 2 und/oder eines Tragseiles 3 einer Oberleitung 4 ist auf einem aus Schwellen 5 und Schienen 6 gebildeten Gleis 7 verfahrbar. Die Maschine 1 weist einen auf Schienenfahrwerken 8 gelagerten und über wenigstens einen auf die Verlegegeschwindigkeit abstellbaren Haupt- bzw. Fahrantrieb 9 verfahrbaren Maschinenrahmen 10 sowie eine Fahrkabine 11 und eine über eine Antriebs-Anordnung 12 höhenverstell- und seitenverschwenkbare Arbeitsbühne 13 auf. Der Haupt- bzw. Fahrantrieb 9 ist für eine Zugkraft von 10 bis 12 Tonnen und eine Befahrbarkeit von Steigungen bis zu 30 Promille ausgebildet. Sollte lediglich ein einziger, beispielsweise in Fig.1 links dargestellter Haupt- bzw. Fahrantrieb 9 vorgesehen sein, so ist dieser über die strichpunktiert dargestellten Leitungen zur Versorgung der verschiedenen Antriebe, insbesondere die Antriebe für die Seilwinden ausgebildet. In der durch einen Pfeil 14 dargestellten Arbeitsrichtung der Maschine 1 unmittelbar hinter der Fahrkabine 11 ist ein über Antriebe 15,16 höhenverstell- und verschwenkbarer Ausleger-Arm 17 zur Höhen- und Seitenverstellung einer zwei Stütz- und Führungs-Rollen 18,19 aufweisenden Hub-Vorrichtung 20 vorgesehen. Der Ausleger-Arm 17 ist über Antriebe 21 teleskopartig bis zu einer Länge von 10 m verstellbar ausgebildet und mit der als Schwenk-Kran 22 ausgebildeten Hub-Vorrichtung 20 verbunden und über die Antriebe 21 mit den beiden Stütz- und Führungs-Rollen 18,19 in Maschinenlängsrichtung wenigstens bis etwa oberhalb des Mittelbereiches zwischen zwei Trägerrahmen 23,24 verstellbar ausgebildet. Jede der beiden Stütz- und Führungs-Rollen 18,19 ist mit ihrer jeweiligen Rollen-Achse 25,26 am Endbereich des mit dem Ausleger-Arm 17 über eine vertikale Achse 27 verdrehbaren Traggliedes 28 zur seitlichen Verschwenkbarkeit zusätzlich um eine senkrecht oder zur Draht- bzw. Seilrichtung im wesentlichen parallel verlaufende Schwenkachse 29,30 über eine Rollen-Halterung 31 drehbar gelagert. Die für den Fahrdraht 2 vorgesehene Stütz- und Führungs-Rolle 19 ist zur anderen Stütz- und Führungs-Rolle 18 entsprechend einer gewünschten Soll-Lage über einen mit einem Hebelgestänge verbundenen Antrieb 32 verstellbar ausgebildet. Die zur Spannung bzw. Führung und Halterung des Fahrdrahtes 2 vorgesehene Stütz- und Führungs-Rolle 19 ist in Arbeitsrichtung der Maschine 1 der Stütz- und Führungs-Rolle 18 für das Tragseil 3 nachgeordnet.

Jeder der beiden in Maschinenlängsrichtung hintereinander angeordneten und wippenartig ausgebildeten Trägerrahmen 23,24 ist jeweils mit einer Draht- bzw. Seil-Trommel 33,34 für den Fahrdraht 2 bzw. das Tragseil 3 und einer eigenen als Seilwinde 35,36 ausgebildeten Zugspannungs-Vorrichtung 37,38 verbunden und jeweils um eine in Maschinenlängsrichtung verlaufende Achse 39 verschwenkbar am Maschinenrahmen 10 gelagert. Auf dieser Draht- bzw. Seil-Trommel sind etwa 900 bis 1600 m Tragseil bzw. Fahrdraht mit einem Gewicht von etwa 2 bis 3 Tonnen aufgewickelt. Die Querschnittsfläche von Tragseil und Fahrdraht beträgt etwa 70 bzw. 110 mm². Jede der beiden Seilwinden 35,36 setzt sich aus zwei in Maschinenlängsrichtung hintereinander angeordneten und mit einem Kettenantrieb 40 miteinander verbundenen, Rillen aufweisenden Umlenkrollen 41 zusammen. Die beiden Stütz- und Führungs-Rollen 18,19 und die der Trommel 33 zugeordneten Draht- bzw. Seil-Umlenkrollen 41 sind in ihrem Durchmesser vorzugsweise gleich groß. Diese Rollen sind für eine Umlenkung um wenigstens 90° der relativ biegesteifen Drähte, je nach Draht-Querschnittsbemessung, mit einem Mindest-Durchmesser vorzugsweise von wenigstens einem Meter ausgebildet. Im Mittelbereich der beiden Trägerrahmen 23,24 ist eine Draht- bzw. Seil-Reserve-Trommel 42,43 vorgesehen (siehe auch Fig.2), die mit Hilfe eines am Ausleger-Arm 17 befestigten Hakens 44 transportierbar sind. Jede Seilwinde 35,36 weist einen eigenen Dreh-Antrieb 45 auf, der jeweils über entsprechende Hydraulikleitungen mit einer zentralen Hydraulikpumpe 46 verbunden ist.

Mit a ist die Soll-Lage bzw. Höhen-Lage des Tragseiles 3, mit b die Soll-Lage bzw. Höhen-Lage des im Querschnitt wesentlich stärkeren Fahrdrahtes 2 und mit c der Abstand zwischen Tragseil 3 und Fahrdraht 2 bezeichnet. Die als höhenverstell- und seitenverschwenkbare Bediener-Kabine bzw. Fahr-Korb 47 ausgebildete Arbeitsbühne 13 ist neben einer Material-Lagerstelle 48 angeordnet. Sämtliche auf der Maschine 1 angeordneten Antriebe, insbesondere 9,15,16,45 sind durch eine zentrale, insbesondere eine digitale Zugkraft-Anzeige 49 aufweisende Steuereinrichtung 50 fernsteuerbar, die in der Bediener-Kabine 47 angeordnet ist. Diese ist mit strichpunktierten Linien in der jeweiligen Arbeitsposition (Fig.1 und 2) dargestellt, bei der eine Bedienungsperson 51 die Bedienung der Steuereinrichtung 50 und die Befestigung des Tragseiles 3 und des Fahrdrahtes 2 auf einem mit einem Fahrleitungsmasten 52 verbundenen Ausleger 53 durchführt. Der Maschine 1 ist ein über einen Antrieb 54 selbstverfahrbarer Gleis-Oberbau- oder Turmwagen 55 mit über Antriebe höhen- und längsverstellbarem Arbeitsgerüst 56 zum Aufbau bzw. zur Lagerung für den Fahrdraht 2 und das Tragseil 3 miteinander verbindenden Einzelteile 57 bzw. der Teile für die Befestigung der mit den jeweiligen Masten 52 verbundenen Ausleger 53 nachgeordnet. Im vorderen Maschinenendbereich ist ein höhen- und seitenverstellbarer Arbeitskran 58 für den Zutransport aller Teile, zum Beispiel der Einzelteile 57, angeordnet. Im Bereich von der Seilwinde 35,36 und der zugeordneten Stütz- und Führungs-Rolle 18,19 ist jeweils ein am Trägerrahmen 24 bzw. 23 angeordneter, am Fahrdraht bzw. am Tragseil 2,3 anliegender und gegebenenfalls mit einem Wegmesser verbundener Spannungsprüfer 59,60 zur Aufrechterhaltung bzw. meßbaren Feststellung einer konstanten bzw. wahlweisen Seil- bzw. Drahtspannung vorgesehen, der mit der zentralen Steuereinrichtung 50 sowie dem jeweiligen Seilwinden-Antrieb 45 und dem Haupt- bzw. Fahrantrieb 9 verbunden ist. Die Spannung des Fahrdrahtes und Tragseiles beträgt etwa 1000 zu 700 kg. Die als seitenverstellbarer Schwenk-Kran 22 ausgebildete und mit einem Höhenmeß- und Anzeigeorgan 61 verbundene Hub-Vorrichtung 20 ist im Bereich des einen Maschinenrahmen-Endes 62 unmittelbar hinter der Fahrkabine 11 angeordnet. Die über die Antriebs-Anordnung 12 höhenverstell- und seitenverschwenkbare, als Bediener-Kabine bzw. Fahr-Korb 47 ausgebildete Arbeitsbühne 13 ist im Bereich des anderen Maschinenrahmen-Endes 63 neben der Material-Lagerstelle 48 angeordnet.

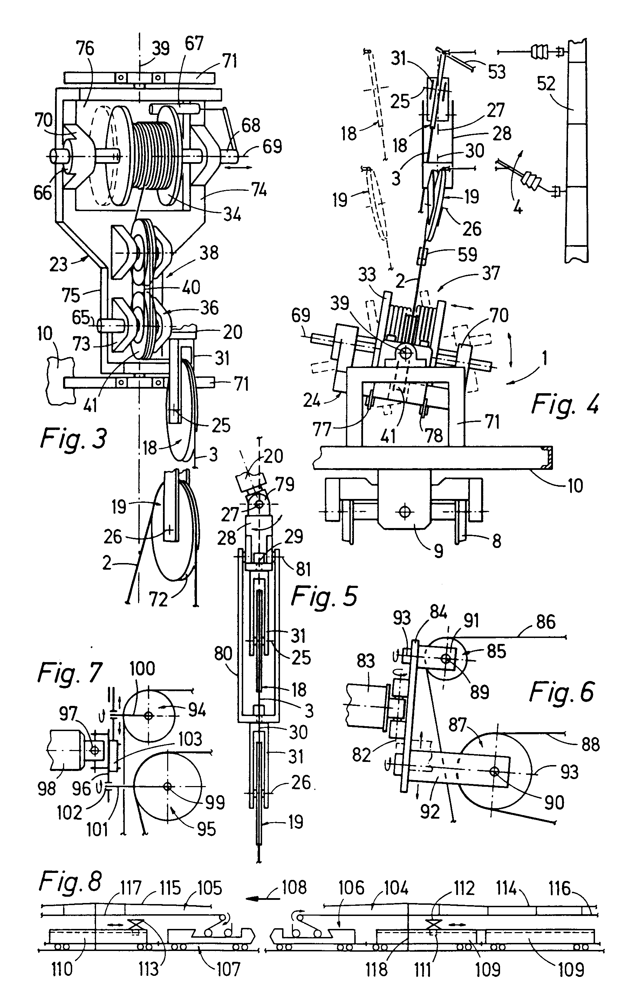

Wie insbesondere in den Fig.1 und 2 dargestellt, weist jede Seilwinde 35,36 eine weitere Umlenkrolle 64 auf, die jeweils über den Kettenantrieb 40 mit der benachbarten Umlenkrolle 41 drehverbunden ist. Beide gleich großen, aber je Trägerrahmen 23 bzw. 24 im Durchmesser verschieden groß bemessenen Umlenkrollen 41,64 mit ihren jeweiligen Umlenkrollen-Achsen 65 sind zur mehrfachen Umwicklung durch das Tragseil 3 bzw. den Fahrdraht 2 zur meßbaren Erstellung eines entsprechenden Zugspannungs-Drehmomentes ausgebildet. Die mit einem Dreh-Antrieb 66 für den Einsatz beim Abwickeln des Drahtes oder Seiles 2,3 beaufschlagbare Draht- bzw. Seil-Trommel 33,34 ist jeweils mit einem am Trägerrahmen 23,24 angeordneten Antrieb 67 zur Verschiebung quer zur Maschinenlängsrichtung verbunden. Dazu ist jeweils eine mit der Trommel 33 bzw. 34 verbundene und je Trommel entsprechend lang ausgebildete Trägerachse 68 mit einer Drehachse 69 in einem mit dem Trägerrahmen 23,24 verbundenen Lagerbock 70 querverschiebbar gelagert. Jeder der beiden Trägerrahmen 23,24 ist auf vertikalen, mit dem Maschinenrahmen 10 verbundenen Lagerböcken 71 über die Achsen 39 verschwenkbar abgestützt. Die Arbeitsbühne 13 bzw. Bediener-Kabine 47 ist mit vollen Linien in der Überstellposition dargestellt. Zwei von vielen möglichen äußeren seitlichen Arbeitsstellungen der Bediener-Kabine 47 sind mit strichpunktierten Linien in Fig.2 ersichtlich. Die Dreh-Rollen-Achsen 25,26 der Stütz-und Führungs-Rollen 18,19 sowie die Umlenkrollen-Achsen 65 der Seilwinden 35,36 und die Drehachsen 69 der beiden Draht- bzw. Seil-Trommeln 33,34 sind der Einfachheit halber in horizontaler Lage (Mittel-Stellung) dargestellt. Die Lage dieser Achsen ist dann gegeben, wenn sich die Stütz- und Führungs-Rollen 18,19 im Arbeitseinsatz bei dem - im zick-zack-Verlauf zu verlegenden - gespannten Fahrdraht 2 bzw. Tragseil 3 genau über der Maschinenlängsachse befinden bzw. auch in der Überstellposition. Bei einer seitlichen Auslenkung der Stütz- und Führungs-Rollen 18,19 entsprechend dem vorschriftsmäßigen zick-zack-förmigen Seitenverlauf der Oberleitung 4 - mit einer maximalen Entfernung von etwa 40 cm in bezug auf die Gleismittel-Linie - sind diese Achsen, wie später noch insbesondere in Fig.3 und 4 beschrieben wird, in bezug auf die Horizontale etwas geneigt angeordnet. Auch in Fig.1 wurden zum besseren Verständnis die einzelnen Stütz- und Führungs- bzw. Umlenk-Rollen und Trommeln mit ihren Lagerungen in vertikaler Stellung dargestellt, obwohl in der Arbeitsstellung - in Abstellung der seitlichen Fahrdraht- bzw. Tragseil-Abweichung zur Gleisachse (die in der Praxis etwa bis zu 40 cm beträgt) eine geringe Schrägstellung, wie z.B. in Fig.3 ersichtlich, gegeben ist.

Die in Fig.3 dargestellten Stütz- und Führungs-Rollen 18,19 sind in einer durch Verschwenkung des Schwenk-Kranes 22 seitlichen Lage in bezug auf die Maschinenlängsachse dargestellt, wobei die beiden Dreh-Rollen-Achsen 25,26 zur Horizontalen geringfügig geneigt sind. Ebenso sind die beiden Umlenkrollen-Achsen 65 der Seilwinde 36 bzw. auch der in dieser Figur nicht dargestellten Seilwinde 35 für den Fahrdraht 2 sowie die Drehachse 69 der Seil-Trommel 34 bzw. auch der Draht-Trommel 33 für den Fahrdraht 2 zur Horizontalen etwas geneigt angeordnet. Jede der beiden Stütz- und Führungs-Rollen 18,19 weist eine Führungs-Rille 72 zur Aufnahme des Fahrdrahtes 2 bzw. Tragseiles 3 auf. Jede der beiden die Seilwinde 36 bildenden kleineren Umlenkrollen 41 und 64 ist auf mit dem Trägerrahmen 23 verbundenen Lagerböcken 73 um die Umlenkrollen-Achsen 65 drehbar gelagert. Der wippenartige, am Maschinenrahmen 10 gelagerte Trägerrahmen 23 ist im wesentlichen aus einem zur Lagerung der Trommel 34 vorgesehenen unten offenen Rahmenteil 74 und einem an diesen anschließenden, zur Lagerung der Seilwinde 36 vorgesehenen Mittel-Träger 75 gebildet. Der zweite, mit der Draht-Trommel 33 der beiden größeren Umlenkrollen 41 und 64 bzw. der Seilwinde 35 verbundene Trägerrahmen 24 ist gleichartig, jedoch etwas größer und stärker ausgebildet. Eine im unten offenen Rahmenteil 74 vorgesehene Öffnung 76 ist so groß ausgebildet, daß die entsprechende Trommel 34 problemlos mit Hilfe des Antriebes 67 querverschoben werden kann.

In Fig.4 ist der wippenartige Trägerrahmen 24 mitsamt der darauf angeordneten Draht-Trommel 33 und vorderen größeren Umlenkrolle 41 der Seilwinde 35 mit der sich aus der geringfügigen seitlichen Verschwenkung der Stütz- und Führungs-Rollen 18,19 ergebenden Neigung erkennbar. Die entsprechend dem zick-zack-förmigen Seitenverlauf der Oberleitung 4 mögliche gegenüberliegende und der jeweiligen Stellung entsprechende Seiten- bzw. Schwenkposition ist durch strichlierte Linien dargestellt. Der Trägerrahmen 24 für den Fahrdraht 2 - ebenso auch der Trägerrahmen 23 für das Tragseil 3 - ist jeweils in der seitlichen Dreh- bzw. Schwenkbewegung um die in Maschinenlängsrichtung verlaufenden Achsen 39 durch Feder- bzw. Anschlagglieder 77,78 begrenzt, die mit dem Trägerrahmen 24 bzw. 23 verbunden und je nach Schwenklage zur Anlage an den vertikalen Träger des mit dem Maschinenrahmen 10 verbundenen Lagerbockes 71 ausgebildet sind.

Die in Fig.5 ersichtlichen Stütz- und Führungs-Rollen 18,19 liegen in einer vertikalen Ebene, in der die beiden Dreh-Rollen-Achsen 25,26 senkrecht zu der vertikalen Achse 27 eines mit dem Ausleger-Arm 17 der Hub-Vorrichtung 20 verbundenen Gelenkes 79 angeordnet sind. Die Rollen-Halterung 31 der für das Tragseil 3 vorgesehenen Stütz- und Führungs-Rolle 18 ist direkt am Tragglied 28 befestigt und die Rollen-Halterung 31 der für den Fahrdraht 2 vorgesehenen Stütz- und Führungs-Rolle 19 ist auf einem Träger 80 um die Schwenkachse 30 verschwenkbar gelagert. Dieser Träger 80 ist um eine senkrecht zur vertikalen Achse 27 verlaufende horizontale Achse 81 verschwenkbar am Tragglied 28 gelagert und mit dem Antrieb 32 (Fig.1) zur Höhenverstellung der Rolle 19 zur anderen Rolle 18 verbunden.

Bei der in Fig.6 ersichtlichen Ausführungs-Variante ist ein über eine etwa vertikale Achse 82 mit einer höhen-und seitenverstellbaren, vorzugsweise als Schwenk-Kran ausgebildeten Hub-Vorrichtung 83 verbundenes Tragglied 84 vorgesehen, an dem eine Stütz- und Führungs-Rolle 85 für ein Tragseil 86 und darunter eine weitere, im Durchmesser größere Stütz- und Führungs-Rolle 87 für einen Fahrdraht 88 befestigt ist. Jede der beiden Stütz-und Führungs-Rollen 85,87 ist um eine Dreh-Rollen-Achse 89,90 drehbar auf einer Rollen-Halterung 91,92 gelagert. Jede dieser Rollen-Halterungen 91,92 ist um eine senkrecht zu den Dreh-Rollen-Achsen 89,90 verlaufende Schwenkachse 93 drehbar am Tragglied 84 gelagert. Die untere Rollen-Halterung 92 kann außerdem noch entsprechend den dargestellten kleinen Pfeilen in Richtung der vertikalen Achse 82 am Tragglied 84 verschiebbar ausgebildet sein. Auf diese Weise ist der gleichbleibende Abstand zwischen dem Tragseil 86 und Fahrdraht 88 während der Abwicklung bzw. Montage wahlweise verstellbar.

Das in Fig.7 ersichtliche Ausführungsbeispiel zeigt ein mit Stütz- und Führungs-Rollen 94 und 95 für ein Tragseil bzw. einen Fahrdraht verbundenes Tragglied 96, welches über ein Kardangelenk 97 allseits verschwenkbar mit dem Ausleger-Arm eines höhen- und seitenverschwenkbaren Kranes bzw. einer höhen- und seitenverstellbaren Hub-Vorrichtung 98 verbunden ist. Jede der beiden Stütz- und Führungs-Rollen 94,95 ist jeweils um eine Dreh-Rollen-Achse 99 drehbar auf einer Rollen-Halterung 100 bzw. 101 gelagert, die jeweils um eine senkrecht zur Achse 99 bzw. in Längsrichtung der Rollen-Halterung 100 bzw. 101 verlaufende jeweilige Schwenkachse 102 verdrehbar am Tragglied 96 befestigt ist. Die obere Rollen-Halterung 100 ist, wie an Hand der dargestellten Pfeile ersichtlich, auf dem Tragglied 96 höhenverschiebbar gelagert und mittels eines Hydraulikzylinders 103 zur Rollen-Halterung 101 während eines Verlege- oder Aufnahme-Vorganges einstellbar, so daß die Distanz zwischen dem Tragseil und dem Fahrdraht der Oberleitung wahlweise veränderbar ist.

Im folgenden wird die Funktionsweise der erfindungsgemäß ausgebildeten Maschine an Hand der Fig.1 bis 5 näher beschrieben.

Für den Arbeitseinsatz der Maschine 1 werden die Anfangsstücke des auf den Trommeln 33 und 34 aufgewickelten Fahrdrahtes 2 bzw. Tragseiles 3 zweimal jeweils um die beiden größeren bzw. kleineren Umlenkrollen 41,64 der beiden Seilwinden 35,36 herumgewickelt, durch die entsprechenden Spannungsprüfer 59 bzw. 60 hindurchgeführt bzw. an diese angelegt und anschließend in die Führungs-Rillen 72 der beiden Stütz- und Führungs-Rollen 18,19 gelegt. Anschließend werden die beiden Anfangsstücke zu Beginn eines beispielsweise bis zu 1200 m langen Streckenabschnittes an einer provisorischen Befestigung mit einem der Fahrleitungsmaste 52 verbunden. Durch Beaufschlagung der Antriebe 15 und 21 wird der Schwenk-Kran 22 der Hub-Vorrichtung 20 solange mit seinem Ausleger-Arm 17 höhenverstellt, bis das Tragseil 3 und der Fahrdraht 2 im Bereich zwischen den Stütz- und Führungs-Rollen 18,19 und der provisorischen Befestigung in die gewünschte Soll-Höhenlage a bzw. b zu liegen kommt. Der gewünschte Soll-Abstand zwischen Tragseil 3 und dem Fahrdraht 2 wird durch Beaufschlagung des Antriebes 32 mit entsprechender Höhenverlagerung der Stütz- und Führungs-Rolle 19 eingestellt. Die inzwischen in die Bediener-Kabine bzw. den Fahr-Korb 47 gestiegene Bedienungsperson 51 beaufschlagt mit Hilfe der Steuereinrichtung 50 die Höhenverstellantriebe 13, so daß der Fahr-Korb 47 in die gewünschte, mit strichpunktierten Linien angedeutete Höhenposition zu liegen kommt. Eine weitere, für den nachfolgenden Gleis-Oberbauwagen 55 zuständige Bedienungsperson befindet sich am Arbeitsgerüst 56. Zu Beginn des Arbeitseinsatzes wird nunmehr durch die Bedienungsperson 51 im Fahr-Korb 47 der Haupt-Fahrantrieb 9 mit beispielsweise bis zu 12 Tonnen Zugkraft mit den beiden Zugspannungs-Vorrichtungen 37,38 so lange betätigt, bis das Tragseil 3 und der wesentlich stärker zu spannende Fahrdraht 2 die geforderte Zugspannung, beispielsweise 1000 kg für den Fahrdraht 2 bzw. 700 kg für das Tragseil 3 aufweisen. Diese vorgeschriebene Zugspannung wird jeweils durch die beiden elektronischen Spannungsprüfer 59,60 gemessen und der die Fernsteuerung durchführenden Bedienungsperson über die digitale Zugkraft-Anzeige 49 direkt angezeigt. Sobald die für die endgültige Montage der Oberleitung 4 vorgeschriebene vorschriftsmäßige Zugkraft für das Tragseil 3 und den Fahrdraht 2 erreicht ist, werden - unter kontinuierlicher Fortsetzung der langsamen Vorfahrt der Maschine 1 in Richtung des Pfeiles 14 - die Dreh-Antriebe 45 der beiden Seilwinden 35 und 36 sowie die Antriebe 67,66 der beiden Trommeln 33 und 34 beaufschlagt. Im folgenden wird durch die beiden Spannungsprüfer 59,60 automatisch jeder der beiden Dreh-Antriebe 45 so gesteuert, daß in Verbindung mit der kontinuierlichen Vorfahrt der Maschine 1 die geforderte Zugkraft für das Tragseil 3 bzw. den Fahrdraht 2 ununterbrochen aufrechterhalten wird. Zur Erzielung der seitlichen Auslenkung der Oberleitung 4 entsprechend ihrem zick-zack-förmigen Verlauf wird der Dreh-Antrieb 16 derart durch die Bedienungsperson 51 beaufschlagt, daß die Hub-Vorrichtung 20 mitsamt den Stütz- und Führungs-Rollen 18,19 seitlich entsprechend der genannten Auslenkung der Oberleitung 4 verschwenkt wird (siehe insbesondere Fig.3 und 4). Durch diese seitliche Verschwenkung des Schwenk-Kranes 22 kommt es unter voller Aufrechterhaltung der vorschriftsmäßigen Zugspannung zu einer Verdrehung der Stütz- und Führungs-Rollen 18,19 um die jeweilige Schwenkachse 29 bzw. 30. Ebenso werden die Stütz- und Führungs-Rollen 18,19 mitsamt dem Tragglied 28 um die vertikale Achse 27 in bezug auf den Ausleger-Arm 17 automatisch in die Richtung des gespannten Tragseiles 3 bzw. Fahrdrahtes 2 verschwenkt (siehe die strichpunktierte Darstellung des Verschwenk-Kranes 22 in Fig.2 sowie die ebenfalls strichpunktierte Lage des Tragseiles 3 und Fahrdrahtes 2 vor der Befestigung mit dem Ausleger 53).

Nachdem die im Fahr-Korb 47 befindliche Bedienungsperson 51 einen seitlich vom Fahrleitungsmast 52 abstehenden Ausleger 53 erreicht - wobei die Maschine 1 an diesen Fahrleitungsmast 52 mit ihren Stütz- und Führungs-Rollen 18,19 bereits vorbeigefahren ist und mit den Rollen 18 und 19 den Fahrdraht und das Tragseil im gleichen Richtungsverlauf zu der Soll-Höhen- und Seiten-Lage gespannt aufrecht erhält - wird das gespannte Tragseil 3 durch diese Bedienungsperson 51 vorschriftsmäßig mit dem Ausleger 53 verbunden. Diese Verbindung kann bei kontinuierlicher Weiterfahrt oder auch bei Stillstand der Maschine 1 durchgeführt werden, wobei der Fahr-Korb 47 bei kontinuierlicher Weiterfahrt durch entsprechende teleskopartige Längsverschiebung des Ausleger-Armes der Arbeitsbühne 13 örtlich im Bereich des genannten Auslegers 53 für die Dauer der Befestigungsarbeit stillsteht. Bei Stillstand der Maschine 1 stehen auch die Dreh-Antriebe 45 der beiden Seilwinden 35,36 sowie die Antriebe 66 und 67 der beiden Trommeln 33,34 zwischenzeitlich still bzw. werden nicht mehr beaufschlagt. Nach durchgeführter vorschriftsmäßiger Verbindung des Tragseiles 3 mit dem Ausleger 53 wird die Arbeitsvorfahrt der Maschine 1 fortgesetzt, wobei die Hub-Vorrichtung 20 bzw. der Schwenk-Kran 22 mitsamt den Stütz- und Führungs-Rollen 18,19 unter entsprechender Beaufschlagung des Dreh-Antriebes 16 sowie unter voller Aufrechterhaltung der vorschriftsmäßigen Zugspannung allmählich auf die gegenüberliegende Seite entsprechend dem zick-zack-förmigen Seitenverlauf der Oberleitung 4 verschwenkt wird. Gleichzeitig wird durch die im Arbeitsgerüst 56 des nachfolgenden Gleis-Oberbauwagens 55 befindliche Bedienungsperson durch Anbringung der Einzelteile 57 die vorschriftsmäßige Verbindung in der gewünschten Lage (Soll-Lage) zwischen Tragseil 3 und Fahrdraht 2 zwischen den Fahrleitungsmasten durchgeführt. Dabei kann der Gleis-Oberbauwagen 55 kontinuierlich im Anschluß an die Maschine 1 weiterfahren, während das Arbeitsgerüst 56 über entsprechende Führungen und Antriebe am Maschinenrahmen je nach Erfordernis längsverschiebbar ist.

Durch die beschriebene Seitenverschwenkung des Schwenk-Kranes 22 mitsamt dem Ausleger-Arm 17 und den Stütz- und Führungs-Rollen 18,19 erfolgt automatisch eine entsprechende Verschwenkung der beiden mit den Seilwinden 35 bzw. 36 und den Trommeln 33 bzw. 34 verbundenen Trägerrahmen 23,24 um die in Maschinenlängsrichtung verlaufenden Achsen 39 (siehe insbesondere Fig.3 und 4). Diese automatische Verschwenkbewegung der Trägerrahmen 23,24 erfolgt durch die Zugkraft des seitlich ausgelenkten Tragseiles 3 bzw. Fahrdrahtes 2, kann aber auch gegebenenfalls durch entsprechende Antriebe unterstützt werden. Dabei verhindern die beiden Feder- bzw. Anschlagglieder 77,78 (Fig.4) eine zu starke Ausschwenkbewegung. Durch die Verschwenkung der beiden Trägerrahmen 23,24 ist sichergestellt, daß auch bei einer seitlichen Verschwenkung der Hub-Vorrichtung 20 mitsamt den Stütz- und Führungs-Rollen 18,19 ein problemloser Ablauf des unter Zugspannung stehenden Tragseiles 3 bzw. Fahrdrahtes 2 von der entsprechenden größeren bzw. kleineren Umlenkrolle 41 der Seilwinde 35 bzw. 36 möglich ist. Durch die mehrfache Umwicklung des Tragseiles 3 bzw. Fahrdrahtes 2 um die jeweiligen beiden Umlenkrollen 41 und 64 der Seilwinden 35,36 ist - unter konstanter Aufrechterhaltung der geforderten Zugspannung - ein Schlupf zuverlässig ausgeschlossen. Mit Hilfe der Antriebe 67 werden die beiden Seil- bzw. Draht-Trommeln 33,34 entsprechend der Aufwicklung querverschoben, so daß der abgewickelte Bereich des Tragseiles 3 bzw. Fahrdrahtes 2 immer genau senkrecht zu den beiden Umlenkrollen-Achsen 65 zu liegen kommt. Sobald im Rahmen der kontinuierlichen Arbeitsvorfahrt der nächste Fahrleitungsmast 52 mit einem Ausleger 53 erreicht ist, wird wieder durch die Bedienungsperson 51 im Fahr-Korb 47 die vorschriftsmäßige, endgültige Befestigung des Tragseiles 3 mit diesem Ausleger 53 durchgeführt. Anschließend erfolgt wieder eine allmähliche Seitenverschwenkung der beiden Stütz- und Führungs-Rollen 18,19 mit Hilfe des Dreh-Antriebes 16 auf die gegenüberliegende Seite gemäß dem in der Praxis bis etwa 80 cm breiten zick-zack-förmigen Verlauf der Oberleitung 4, wobei automatisch die Trägerrahmen 23,24 auf die gegenüberliegende Schwenkposition (siehe strichlierte Linien in Fig.4) mitverschwenkt werden. Durch das mit verschiedenen Anschlägen für den Höhenverstellantrieb 15 der Hub-Vorrichtung 20 bzw. des Schwenk-Kranes 22 versehene Höhenmeßorgan 61 ist eine exakte Beibehaltung der vorschriftsmäßigen Soll-Höhen-Lage a und b des Tragseiles 3 und Fahrdrahtes 2 durch Fernsteuerung der Bedienungsperson erreichbar. Sobald zum Beispiel durch einen Tunnel eine Absenkung der Soll-Lage a des Tragseiles 3 erforderlich ist, wird die gesamte Hub-Vorrichtung 20 entsprechend abgesenkt, wobei unter Beaufschlagung des Antriebes 32 die Stütz- und Führungs-Rolle 19 derart angehoben wird (siehe strichpunktierte Linien in Fig.1), daß der Fahrdraht 2 nach wie vor in die gleiche Soll-Höhenlage b umgelenkt wird. Nach Beendigung einer Sektion wird das Tragseil und der Fahrdraht unter voller Aufrechterhaltung der erforderlichen Zugspannung im Bereich des letzten Fahrleitungsmastes 52 befestigt und in bekannter Weise mit Gewichten verbunden, die nach Lösung dieser Befestigung die vorschriftsmäßige Zugspannung auf Dauer-Betrieb ausüben. Zu Beginn einer neuen Sektion werden die Anfangsstücke des Tragseiles 3 bzw. des Fahrdrahtes 2 wieder in der bereits beschriebenen Art und Weise befestigt und mit der erfindungsgemäßen Maschine 1 von den Trommeln 33 und 34 abgerollt.

Zur kontinuierlichen Verlegung der Oberleitung 4 unter Befestigung auf mit den Fahrleitungsmasten 52 verbundenen Auslegern 53, wobei Tragseil 3 und Fahrdraht 2 von Speicher-Trommeln 33,34 abgewickelt und unter Aufbringung einer gewünschten Zugkraft mit Hilfe der Zugspannungs-Vorrichtung 37 und 38 um die Stütz- und Führungs-Rollen 18,19 gespannt werden, werden im wesentlichen folgende Verfahrensschritte durchgeführt:

Das Tragseil 3 und der Fahrdraht 2 werden unter Spannung mit Hilfe der höhen- und seitenverstellbaren Stütz-und Führungs-Rollen 18,19 kontinuierlich in ihre jeweilige Soll-Höhen- und Seiten-Lage gebracht, in dieser unter Zugspannung gehalten und mit dem Ausleger 53 für eine endgültige Fixierung verbunden. Danach werden die Stütz- und Führungs-Rollen 18,19 unter unveränderter Beibehaltung ihrer Höhenlage und kontinuierlicher Weiterfahrt der Maschine 1 seitlich entsprechend dem zick-zack-förmigen Verlauf der Oberleitung 4 verschwenkt bzw. auf diesen Verlauf zentriert, wobei im gleichen Arbeitsgang der gespannte Fahrdraht 2 mit dem gespannten Tragseil 3 mit Hilfe eines mit der Maschine 1 gegebenenfalls gekuppelten Wagens 55 durch die Einzel-Befestigungselemente 57 zueinander in dieser Soll-Lage endgültig montiert werden. Das Tragseil 3 und der Fahrdraht 2 werden somit innerhalb einer Sektion immer von Fahrleitungsmast zu Fahrleitungsmast 52 weitergespannt, um nach Passieren eines Fahrleitungsmastes 52 in dem bereits durchfahrenen Abschnitt von Mast zu Mast die verschiedenen Befestigungen an dem in der Soll-Lage gehaltenen und gespannten Draht bzw. Seil durchzuführen.

Wie in Fig.8 dargestellt, ist einer zum Umbau von Oberleitungen 104,105 ausgebildeten Maschine 106 der gleichen wie in den Fig.1 bis 5 beschriebenen Bauart eine weitere, vorzugsweise gleichartig ausgebildete Maschine 107 in der durch einen Pfeil 108 dargestellten Arbeitsrichtung vorgeordnet. Beide Maschinen 106,107 sind zueinander spiegelbildlich angeordnet und mit wenigstens einem Arbeitsfahrzeug 109,110 mit jeweils einer in Maschinenlängsrichtung über einen Antrieb 111 längsverschieb- und höhenverstellbaren Arbeitsplattform 112,113 verbunden. Beide Oberleitungen 104,105 setzen sich jeweils aus einem Tragseil 114,115 und einem Fahrdraht 116,117 zusammen und sind über Ausleger auf Fahrleitungsmasten 118 befestigt. Im Arbeitseinsatz wird durch die in Arbeitsrichtung vorgeordnete Maschine 107 die alte Oberleitung 105 mit ihrem Fahrdraht und Tragseil unter kontinuierlicher Umlenkung in Richtung des kleinen Pfeiles auf entsprechende Trommeln aufgerollt, wobei durch auf der Arbeitsplattform 113 befindliche Bedienungspersonen das Tragseil von den entsprechenden vorangehenden Auslegern gelöst wird und die Einzelteile demontiert werden. Durch die nachfolgende Maschine 106 erfolgt in der bereits zu den Fig.1 bis 5 beschriebenen Weise ein kontinuierliches Abrollen und Montage der neuen Oberleitung 104 mit ihrem neuen Fahrdraht und neuem Tragseil, jeweils unter Aufrechterhaltung einer gleichbleibenden vorschriftsmäßigen Zugspannung. Durch auf der Arbeitsplattform 112 befindliche Bedienungspersonen erfolgt eine sofortige End-Fixierung des Tragseiles 114 am entsprechenden Ausleger, so daß nach dem Arbeitseinsatz der Maschine 106 und der Arbeitsfahrzeuge 109 die neue Oberleitung 104 in der gewünschten genauen Soll-Lage komplett und endgültig montiert ist.

## Patentansprüche

1. Gleisverfahrbare Maschine zum kontinuierlich strecken- bzw. abschnittsweisen Verlegen des Fahrdrahtes (2) und/oder des Tragseiles (3) einer Oberleitung eines Gleises, mit einem auf Schienenfahrwerken gelagerten und über einen auf die Verlegegeschwindigkeit abstellbaren Fahrantrieb verfahrbaren Maschinenrahmen (10), einer Fahrkabine (11) und einer über einen Antrieb höhenverstellbaren Arbeitsbühne sowie einer Speicher-Draht- oder Seil-Trommel, einer dieser vorgeordneten und über einen Antrieb und eine Steuereinrichtung beaufschlagbaren Zugspannungs-Vorrichtung (37,38) - der wenigstens eine Führungs-Rolle zugeordnet ist - und einer, über Antriebe höhenverstellbaren und einen verschwenkbaren Ausleger-Arm (17) zur Höhen- und Seitenverstellung einer Stütz- und Führungs-Rolle (18,19) aufweisenden, Hub-Vorrichtung, **dadurch gekennzeichnet**, daß die, die Stütz- bzw. Führungs-Rolle (18,19;85,87;94,95) und den Ausleger-Arm (17) aufweisende Hub-Vorrichtung (20) mit der, der Speicher-Trommel (33,34) zugeordneten Zugspannungs-Vorrichtung (37,38) mit Führungs-Rolle (41) - zur kontinuierlichen Halterung und Spannung des Fahrdrahtes (2) und/oder des Tragseiles (3) in einer gewünschten gleichbleibenden Höhen- bzw. Soll-Lage (a,b) - für eine gleichzeitige, endgültige Höhen-Distanzierung, mit durch eine Bedienungsperson auf der Arbeitsbühne erfolgender - Befestigung des Fahrdrahtes (2) und/oder des Tragseiles (3) an dem jeweiligen Fahrleitungsmast (52) - ausgebildet ist.

2. Maschine nach Anspruch 1, dadurch gekennzeichnet, daß sowohl die mit dem Ausleger-Arm (17) verbundene Stütz- und Führungs-Rolle (18,19;85,87;94,95) als auch die der Zugspannungs-Vorrichtung (37,38) zugeordnete und als Umlenkrolle ausgebildete Führungs-Rolle (41) für einen - von der insbesondere seitlichen Verschwenkung der Hub-Vorrichtung (20) unabhängigen-immer im wesentlichen senkrechten Auf- bzw. Ablauf des Tragseiles (3) oder Fahrdrahtes (2) in bezug auf ihre Dreh-Rollen-Achse (25,26,65) angeordnet ist.

3. Maschine nach Anspruch 1 und 2, dadurch gekennzeichnet, daß die Stütz- und Führungs-Rolle (18,19; 85,87;94,95) für eine kontinuierliche Halterung, Führung und Umlenkung des Fahrdrahtes (2) oder des Tragseiles (3) in die gleichbleibende Höhen- bzw. Soll-Lage (a,b) über die Antriebe der Hub-Vorrichtung (20) beaufschlagbar und insbesondere bei dem zick-zack-förmigen Seitenverlauf des Drahtes oder Seiles - zur im wesentlichen selbsttätigen Zentrierung bzw. Ausrichtung in Seil- bzw. Draht-Längsrichtung - am Ausleger-Arm (17) verschwenkbar, insbesondere um eine vertikale Achse (27) gelagert ist.

4. Maschine nach Anspruch 1 und 2, dadurch gekennzeichnet, daß die - der Draht- bzw. Seil-Trommel (33,34) und der Zugspannungs-Vorrichtung (37,38) vor- bzw. zugeordnete Umlenkrolle (41) im Bereich unterhalb der Stütz- und Führungs-Rolle (18,19) vorgesehen und auf einer quer zu ihrer Umlenkrollen-Achse (65) in Maschinenlängsrichtung verlaufenden Achse (39) am Maschinenrahmen (10) verschwenkbar gelagert ist.

5. Maschine nach einem der Ansprüche 1 bis 4, dadurch gekennzeichnet, daß die, insbesondere jeweils mit einer Führungs-Rille (72) ausgebildete Stütz- und Führungs-Rolle (18,19) und Draht- bzw. Seil-Umlenkrolle (41) in ihrem Durchmesser vorzugsweise gleich groß und für eine Umlenkung um wenigstens 90° der relativ biegesteifen Drähte, je nach Draht-Querschnittsbemessung, mit einem Mindest-Durchmesser, vorzugsweise wenigstens 1 m, ausgebildet sind.

6. Maschine nach einem der Ansprüche 1 bis 5, dadurch gekennzeichnet, daß lediglich eine Stütz- und Führungs-Rolle (18 bzw. 19) für den Fahrdraht (2) oder für das Tragseil (3) vorgesehen ist, die gemeinsam mit ihrer Rollen-Achse (25,26) an einem, mit dem Ausleger-Arm (17) über das lediglich die vertikale Achse (27) aufweisende Gelenk (79) verschwenkbar verbundenen Tragglied (28) zur im wesentlichen selbsttätigen Zentrierung bzw. Einstellung auf die Soll-Lage zum Draht- bzw. Seil-Richtungsverlauf gelagert ist.

7. Maschine nach Anspruch 6, dadurch gekennzeichnet, daß die Stütz- und Führungs-Rolle (18,19) mit ihrer Rollen-Achse (25,26) am Endbereich des mit dem Ausleger-Arm (17) über die vertikale Achse (27) verdrehbaren Traggliedes (28) zur allseitigen Verschwenkbarkeit zusätzlich um eine senkrecht bzw. zur Draht- bzw. Seil-Richtung im wesentlichen parallel verlaufende Schwenkachse (29,30) über eine Rollen-Halterung (31) drehbar gelagert ist.

8. Maschine nach einem der Ansprüche 1 bis 7, dadurch gekennzeichnet, daß die Draht- bzw. Seil-Umlenkrolle (41) mit einer zweiten in Maschinenlängsrichtung dahinter angeordneten, vorzugsweise durch einen Kettenantrieb (40) mit dieser drehverbundenen Umlenkrolle (64) - die mit ihrer Umlenkrollen-Achse (65) um die gleiche in Maschinenlängsrichtung verlaufende Achse (39) verschwenkbar ist - die, eine als Zugspannungs-Vorrichtung (37,38) ausgebildete, Seilwinde (35,36) bildet, und daß beide Umlenkrollen (41,64) zur mehrfachen Umwicklung durch das Tragseil (3) bzw. den Fahrdraht (2) zur meßbaren Erstellung eines entsprechenden Zugspannungs-Drehmomentes ausgebildet sind.

9. Maschine nach Anspruch 8, dadurch gekennzeichnet, daß die beiden, die Seilwinde (35,36) bildenden Draht- bzw. Seil-Umlenkrollen (41,64) mit ihren Umlenkrollen-Achsen (65) gemeinsam mit der parallel zur Umlenkrollen-Achse (65) querverschiebbaren Seil- bzw. Draht-Trommel (33,34) auf einem wippenartigen - vorzugsweise in der seitlichen Drehbewegung durch Feder- bzw. Anschlagglieder (77,78) begrenzten - Trägerrahmen (23, 24) gelagert sind, der um die in Maschinenlängsrichtung verlaufende Achse (39) drehbar am Maschinenrahmen (10) gelagert ist.

10. Maschine nach Anspruch 9, dadurch gekennzeichnet, daß die vorzugsweise mit einem Dreh-Antrieb (66) für den Einsatz beim Abtragen des Drahtes oder Seiles - beaufschlagbare Draht- bzw. Seil-Trommel (33, 34) mit einem am Trägerrahmen (23,24) angeordneten Antrieb (67) zur Verschiebung quer zur Maschinenlängsrichtung verbunden ist.

11. Maschine nach einem der Ansprüche 1 bis 10, dadurch gekennzeichnet, daß zur kontinuierlich fortlaufenden Halterung und Spannung des Fahrdrahtes (2) und Tragseiles (3) in der Soll-Lage (a,b) jeweils eine, mit dem seiten- und höhenverschwenkbaren Ausleger-Arm 17) der Hub-Vorrichtung (20) verbundene und über das Gelenk (79) gemeinsam verschwenkbare Stütz- und Führungs-Rolle (18,19) für den Fahrdraht (2) und das Tragseil (3) vorgesehen ist und zwei Trägerrahmen (23,24) angeordnet sind, die jeweils mit einer Draht- bzw. Seil-Trommel (33,34) für den Fahrdraht (2) bzw. das Tragseil (3) und einer eigenen Seilwinde (35,36) bzw. Zugspannungs-Vorrichtung (37,38) verbunden sind.

12. Maschine nach Anspruch 11, dadurch gekennzeichnet, daß die beiden Stütz- und Führungs-Rollen (18,19;85,87;94,95) im vertikalen, der Soll-Lage (a,b) zwischen Fahrdraht (2;88) und Tragseil (3;86) entsprechenden Abstand zueinander auf dem gemeinsamen, mit dem Ausleger-Arm (17) über das Gelenk (79) verschwenkbaren Tragglied (28;84) angeordnet und jeweils voneinander unabhängig mit ihren Rollen-Achsen (25,26;89,90;99) um eine zusätzliche, zu einer durch den Draht- und Seil-Richtungs-Verlauf führenden Ebene, parallel verlaufenden Schwenkachse (29,30;93;102) über eine Rollen-Halterung (31;91,92;100,101) zur Selbst-Zentrierung bzw. -Einstellung drehbar gelagert sind.

13. Maschine nach Anspruch 12, dadurch gekennzeichnet, daß eine Stütz- und Führungs-Rolle (19;87;94) - vorzugsweise die für den Fahrdraht (2;88) - zur anderen Stütz- und Führungs-Rolle (18;85;95) für eine wahlweise andere gewünschte Soll-Lage (a,b), vorzugsweise über einen mit einem Hebelgestänge verbundenen Antrieb (32) im Abstand zueinander ein- bzw. verstellbar am gemeinsamen Tragglied (28;84;96) gelagert ist.

14. Maschine nach Anspruch 12 oder 13, dadurch gekennzeichnet, daß die zur Spannung bzw. Führung des Fahrdrahtes (2) vorgesehene Stütz- und Führungs-Rolle (18,19) in Arbeitsrichtung der Maschine (1) der Stütz- und Führungs-Rolle (18) für das Tragseil (3) nachgeordnet ist.

15. Maschine nach einem der Ansprüche 1 bis 14, dadurch gekennzeichnet, daß die höhenverstellbare Hub-Vorrichtung (20) mit dem über Antriebe höhen- und seitenverschwenkbaren Ausleger-Arm (17) vorzugsweise als ein über Antriebe (15) höhen- und in Maschinenlängsrichtung über Antriebe (21) teleskopartig verstellbarer Schwenk-Kran (22) ausgebildet und in Arbeitsrichtung der Maschine (1) vor den beiden Trägerrahmen (23,24) mit den Seil- bzw. Draht-Trommeln und den Seilwinden (35,36) am Maschinenrahmen (10) angeordnet ist und über die Antriebe mit beiden Stütz- und Führungs-Rollen (18,19) in Maschinenlängsrichtung wenigstens bis etwa oberhalb des Mittelbereiches zwischen den beiden Trägerrahmen (23,24) verstellbar ausgebildet ist.

16. Maschine nach Anspruch 9 oder 11, dadurch gekennzeichnet, daß insbesondere jeder wippenartige, am Maschinenrahmen (10) gelagerte Trägerrahmen (23,24) für den Fahrdraht (2) und das Tragseil (3) im wesentlichen aus einem zur Lagerung der Trommel (33,34) vorgesehenen, unten offenen Rahmenteil (74) und einem an diesen anschließenden, zur Lagerung der Seilwinde (35,36) vorgesehenen Mittel-Träger (75) gebildet ist und daß die beiden Trägerrahmen (23,24) mit ihrem Mittel-Träger (75) in Maschinenlängsrichtung hintereinander angeordnet sind und daß vorzugsweise im Mittelbereich derselben am Maschinenrahmen (10) eine Draht- bzw. Seil-Reserve-Trommel (42,43) vorgesehen ist.

17. Maschine nach einem der Ansprüche 1 bis 16, dadurch gekennzeichnet, daß im Bereich von der Seilwinde (35,36) und der zugeordneten Stütz- und Führungs-Rolle (18,19) jeweils ein am Fahrdraht bzw. am Tragseil (2,3) anliegender, gegebenenfalls mit einem Wegmesser verbundener Spannungsprüfer (59,60) zur Aufrechterhaltung bzw. meßbaren Feststellung einer konstanten bzw. wahlweisen Seil- bzw. Drahtspannung vorgesehen ist, der mit der zentralen Steuereinrichtung (50) sowie dem jeweiligen Seilwinden-Antrieb (45) verbunden ist.

18. Maschine nach einem der Ansprüche 1 bis 17, dadurch gekennzeichnet, daß die insbesondere als seitenverstellbarer Schwenk-Kran (22) ausgebildete und mit einem Höhenmeß- und Anzeigeorgan (61) verbundene Hub-Vorrichtung (20) - im Bereich des einen Maschinenrahmen-Endes (62) - unmittelbar hinter der Fahrkabine (11) angeordnet und die, als über Antriebe (12) höhenverstell- und seitenverschwenkbare Bediener-Kabine bzw. Fahrkorb (47) ausgebildete Arbeitsbühne im Bereich des anderen Maschinenrahmen-Endes (63), vorzugsweise neben einer Material-Lagerstelle (48), angeordnet ist.

19. Maschine nach einem der Ansprüche 1 bis 18, dadurch gekennzeichnet, daß sämtliche Antriebe (9,12, 15,16,21,45) durch die vorzugsweise eine digitale Zugkraft-Anzeige (49) aufweisende zentrale Steuereinrichtung (50) fernsteuerbar sind, die in dem über die Antriebe (12) höhenverstell- und seitenverschwenkbaren Bediener-Fahr-Korb (47) vorgesehen ist.

20. Maschine nach einem der Ansprüche 1 bis 19, dadurch gekennzeichnet, daß ein insbesondere selbstverfahrbarer Gleis-Oberbau- oder Turmwagen (55) mit höhenverstellbarem Arbeitsgerüst (56) zum Abbau oder Aufbau bzw. Lagerung für den gespannten Fahrdraht (2) und/oder das gespannte Tragseil (3) zueinander verbindenden bzw. stützenden Einzelteile (57) bzw. der Teile für die Befestigung der mit den jeweiligen Masten (52) verbundenen Ausleger (53) der Maschine (1) nachgeordnet ist.

21. Maschine nach einem der Ansprüche 1 bis 20, dadurch gekennzeichnet, daß zum Umbau von Oberleitungen der zum Verlegen bzw. Aufnehmen des Fahrdrahtes und des Tragseiles ausgebildeten Maschine (106) eine vorzugsweise gleichartig ausgebildete Maschine (107) in Arbeitsrichtung vorgeordnet und in Bezug zur Arbeitsrichtung spiegelbildlich zu dieser im Abstand angeordnet ist, wobei jede Maschine (106,107) mit wenigstens einem Arbeitsfahrzeug (109,110) mit einer in Maschinenlängsrichtung über jeweils einen Antrieb (111) längsverschieb- und höhenverstellbaren Arbeitsplattform (112,113) verbunden ist (Fig.8).

22. Verfahren zur kontinuierlichen Verlegung einer Oberleitung (4) unter Befestigung auf mit Fahrleitungsmasten (52) verbundenen Auslegern (53), wobei Tragseil und Fahrdraht (2) von Speicher-Trommeln abgewickelt und unter Aufbringung einer gewünschten Zugkraft mit Hilfe einer Zugspannungs-Vorrichtung um Stütz- und Führungs-Rollen (18,19) gespannt werden, **dadurch gekennzeichnet**, daß das Tragseil (3) und der Fahrdraht (2) unter Spannung mit Hilfe der höhen- und seitenverstellbaren Stütz- und Führungs-Rollen (18,19) kontinuierlich in ihre jeweilige Soll-Höhen- und Seiten-Lage gebracht, in dieser unter Spannung gehalten und mit dem Ausleger (53) für eine endgültige Fixierung verbunden werden, wonach die Stütz- und Führungs-Rollen (18,19) unter unveränderter Beibehaltung ihrer Höhenlage und kontinuierlicher Weiterfahrt der Maschine (1) seitlich entsprechend dem zick-zack-förmigen Verlauf der Oberleitung (4) verschwenkt bzw. auf diesen Verlauf zentriert werden und wobei im gleichen Arbeitsgang der gespannte Fahrdraht (2) mit dem gespannten Tragseil (3) mit Hilfe eines mit der Maschine gegebenenfalls gekuppelten Arbeitswagens (55) durch die Einzel-Befestigungselemente zueinander in dieser Soll-Lage endgültig montiert werden.

## Claims

1. A machine, mobile on a railway track, for continuously installing in lengths or sections the contact wire (2) and/or the supporting cable (3) of an overhead line of a railway track, comprising a machine frame (10) mounted on on-track undercarriages and movable by means of a motive drive which may be adjusted to the installing speed, a driver's cab (11) and a work platform which is vertically adjustable by means of a drive, and also comprising a wire or cable storage drum, a tensile stress device (37, 38) arranged in front of the said drum and operable by means of a drive and a control device, and with which at least one guide roller is associated, and a lifting device which is vertically adjustable by means of drives and has a pivotable jib arm (17) for the vertical and lateral adjustment of a support- and guide roller (18, 19), characterised in that the lifting device (20) having the support- and guide roller (18, 19; 85, 87; 94, 95) and the jib arm (17) with the tensile stress device (37, 38), associated with the storage drum (33, 34), with guide roller (41) is designed for continuously supporting and tensioning the contact wire (2) and/or the supporting cable (3) at a desired constant height or target position (a, b), for the final vertical spacing apart at the same time, with the attachment of the contact wire (2) and/or of the supporting cable (3) to the particular catenary mast (52) being performed by an operator on the work platform.

2. A machine according to claim 1, characterised in that both the support- and guide roller (18, 19; 85, 87; 94, 95) connected to the jib arm (17) and the guide roller (41) associated with the tensile stress device (37, 38) and designed as a deflection roller are arranged for the take-up or unwinding of the supporting cable (3) or contact wire (2) which is always substantially perpendicular in relation to the roller axis of rotation (25, 26, 65) thereof, independently of the lateral pivoting, in particular, of the lifting device (20).

3. A machine according to claim 1 and 2, characterised in that the support- and guide roller (18, 19; 85, 87; 94, 95) may be acted upon by means of the drives of the lifting device (20) in order continuously to support, guide and deflect the contact wire (2) or the supporting cable (3) into the constant height or target position (a, b), and particularly with the zigzagging transverse path of the wire or cable, is pivotable on the jib arm (17), more particularly is mounted about a vertical axis (27), for substantially automatic centreing or orienting in the longitudinal direction of the cable or wire.

4. A machine according to claim 1 and 2, characterised in that the deflection roller (41), arranged in front of and associated with the wire or cable drum (33, 34) and the tensile stress device (37, 38) respectively, is provided in the region beneath the support- and guide roller (18, 19) and is mounted so as to be pivotable on the machine frame (10) on an axis (39) extending transversely to its deflection roller axis (65) in the longitudinal direction of the machine.

5. A machine according to one of claims 1 to 4, characterised in that the support- and guide roller (18, 19) and the wire or cable deflection roller (41), each formed, more particularly, with a guide groove (72), are designed so as to be preferably the same size in their diameter and for the deflection of the relatively flexure-resistant wires around at least 90°, are designed with a minimum diameter, preferably at least 1 m, depending on the cross-sectional measurement of the wire.

6. A machine according to one of claims 1 to 5, characterised in that only one support- and guide roller (18 and 19 respectively) is provided for the contact wire (2) or for the supporting cable (3), jointly mounted with its roller axis (25, 26) on a support element (28) connected to the jib arm (17) for pivoting by means of the joint (79) which has only the vertical axis (27), for substantially automatic centreing or adjustment to the target position in relation to the directional path of the wire or cable.

7. A machine according to claim 6, characterised in that the support- and guide roller (18, 19) is rotatably mounted by means of a roller mounting (31) with its roller axis (25, 26) at the end region of the support element (28), which is rotatable with the jib arm (17) via the vertical axis (27), for universal pivoting in addition about a pivot axis (29, 30) extending perpendicularly to or substantially parallel to the wire or cable direction.

8. A machine according to one of claims 1 to 7, characterised in that the wire or cable deflection roller (41), together with a second deflection roller (64) which is arranged behind it in the longitudinal direction of the machine and is preferably rotationally connected to it by a chain drive (40), and which is pivotable with its deflection roller axis (65) about the same axis (39) extending in the longitudinal direction of the machine, forms the cable winch (35, 36) designed as a tensile stress device (37, 38), and in that the two deflection rollers (41, 64) are designed for multiple winding around by the supporting cable (3) or the contact wire (2) for the measurable provision of an appropriate tensile stress torque.

9. A machine according to claim 8, characterised in that the two wire or cable deflection rollers (41, 64), forming the cable winch (35, 36), are mounted with their deflection roller axes (65) together with the cable or wire drum (33, 34), which is transversely displaceable parallel to the deflection roller axis (65), on a rocker-like support frame (23, 24), preferably limited in the lateral rotational movement by spring or stop elements (77, 78), which is mounted on the machine frame (10) so as to be rotatable about the axis (39) extending in the longitudinal direction of the machine.

10. A machine according to claim 9, characterised in that the wire or cable drum (33, 34) which is preferably operable with a rotary drive (66), for use when taking down the wire or cable, is connected to a drive (67) arranged on the support frame (23, 24) for displacement transversely to the longitudinal direction of the machine.

11. A machine according to claim 1 to 10, characterised in that in order to achieve continuously uninterrupted supporting and tensioning of the contact wire (2) and supporting cable (3) in the target position (a, b), respective support- and guide rollers (18, 19) for the contact wire (2) and the supporting cable (3) are provided which are connected to the laterally and vertically pivotable jib arm (17) of the lifting device (20) and are jointly pivotable by way of the joint (79), and two support frames (23, 24) are arranged which are respectively connected to a wire or cable drum (33, 34) for the contact wire (2) or the supporting cable (3) and to an individual cable winch (35, 36) or tensile stress device (37, 38).

12. A machine according to claim 11, characterised in that the two support- and guide rollers (18, 19; 85, 87; 94, 95) are arranged at a vertical distance apart from one another, corresponding to the target position (a, b) between the contact wire (2; 88) and supporting cable (3; 86), on the common support element (28; 84) which is pivotable with the jib arm (17) by means of the joint (79), and are mounted by means of a roller mounting (31; 91, 92; 100, 101) so as to be respectively rotatable independently of one another with their roller axes (25, 26; 89, 90; 99) about an additional pivot axis (29, 30; 93; 102) extending parallel to a plane running through the directional path of the wire and cable for the purpose of self-centreing or -adjustment.

13. A machine according to claim 12, characterised in that a support- and guide roller (19; 87; 94) - preferably the one for the contact wire (2; 88) - is mounted on the common support element (28; 84; 96) so as to be adjustable or displaceable, preferably by means of a drive (32) connected to a lever bar, in relation to the other support- and guide roller (18; 85; 95) at a mutual distance apart, in order to produce an optionally different target position (a, b).

14. A machine according to claim 12 or 13, characterised in that the support- and guide roller (18, 19) provided for tensioning or guiding the contact wire (2) is arranged after the support- and guide roller (18) for the supporting cable (3) in the working direction of the machine (1).

15. A machine according to one of claims 1 to 14, characterised in that the vertically adjustable lifting device (20) with the jib arm (17) which may be vertically and laterally pivoted by means of drives is preferably designed as a revolving crane (22) which is vertically adjustable by means of drives (15) and telescopically adjustable in the longitudinal direction of the machine by means of drives (21), and is disposed on the machine frame (10) in front of the two support frames (23, 24) with the cable or wire drums and the cable winches (35, 36), in the working direction of the machine (1), and is designed to be adjustable by means of the drives with the two support- and guide rollers (18, 19) in the longitudinal direction of the machine at least until it is approximately above the central region between the two support frames (23, 24).

16. A machine according to claim 9 or 11, characterised in that each rocker-like support frame (23, 24), mounted on the machine frame (10), for the contact wire (2) and the supporting cable (3) is, more particularly, formed essentially from a frame part (74), provided for mounting the drum (33, 34) and open at the bottom, and a central support (75), connected thereto and provided for mounting the cable winch (35, 36), and in that the two support frames (23, 24) with their central support (75) are arranged in series in the longitudinal direction of the machine, and in that a reserve wire or cable drum (42, 43) is provided preferably in the central region thereof on the machine frame (10).

17. A machine according to one of claims 1 to 16, characterised in that in the region of the cable winch (35, 36) and the associated support- and guide roller (18, 19), there is provided a respective tension detector (59, 60), adjoining the contact wire and the supporting cable (2, 3) respectively, with a distance measuring device if appropriate, for maintaining or measurably establishing a constant or optional cable or wire tension, the said tension detector being connected to the central control device (50) and to the respective cable winch drive (45).

18. A machine according to one of claims 1 to 17, characterised in that the lifting device (20), designed more particularly as a laterally adjustable revolving crane (22) and connected to a height measuring and indicating means (61) is arranged, in the region of one machine frame end (62), immediately behind the driver's cab (11), and the work platform, designed as an operator's cab or cage (47) which is vertically adjustable and laterally pivotable by means of drives (12), is arranged in the region of the other machine frame end (63), preferably adjacent to a material storage location (48).

19. A machine according to one of claims 1 to 18, characterised in that all the drives (9, 12, 15, 16, 21, 45) may be remotely controlled by the central control device (50) which preferably has a digital tension indicating means (49) and which is provided in the operator's cage (47) which is vertically adjustable and laterally pivotable by means of the drives (12).

20. A machine according to one of claims 1 to 19, characterised in that disposed after the machine (1) is a particularly self-propelling railway track superstructure- or tower wagon (55) with a vertically adjustable scaffold (56) for dismantling or assembling or storing components (57) joining together or supporting the tensioned contact wire (2) and/or the tensioned supporting cable (3) or the parts for the attachment of the brackets (53) connected to the respective masts (52).

21. A machine according to one of claims 1 to 20, characterised in that for the purpose of renewing overhead lines, there is disposed before the machine (106) designed for installing or receiving the contact wire and the supporting cable, in the working direction, a machine (107) which is preferably of identical design and which is arranged at a distance therefrom in mirror-inverted relationship thereto with respect to the working direction, each machine (106, 107) being connected to at least one work vehicle (109, 110) with a work platform (112, 113) which may be longitudinally displaced in the longitudinal direction of the machine and adjusted vertically by means of respective drives (111) (Fig. 8).

22. A method for continuously installing an overhead line (4), attaching it to brackets (53) connected to catenary masts (52), the supporting cable and the contact wire (2) being unwound from storage drums and being tensioned around support- and guide rollers (18, 19) while a desired tension is applied by means of tensile stress device, characterised in that the supporting cable (3) and the contact wire (2) are continuously brought to their particular target height and lateral position under tension by means of the vertically and laterally adjustable support- and guide rollers (18, 19), are held in this position under tension and are connected to the bracket (53) for final fixing, whereupon the support- and guide rollers (18, 19), while retaining their height unchanged and with the machine (1) moving on continuously, are pivoted laterally to correspond to the zigzagging path of the overhead line (4) or are centred on to this path, and wherein in the same work procedure the tensioned contact wire (2) together with the tensioned supporting cable (3) are finally mounted in mutual relation in this target position by means of the individual fastening elements with the aid of a working wagon (55), coupled if appropriate with the machine.

## Revendications

1. Machine déplaçable par roulement sur voie ferrée pour la pose en continu par sections ou par tronçons du fil de contact (2) et/ou du fil porteur (3) d'une caténaire d'une voie ferrée, comprenant un châssis de machine (10) monté sur des trains de roulement sur rails et déplaçable par roulement par un dispositif de locomotion pouvant être adapté à la vitesse de pose, une cabine de conduite (11) et une plate-forme de travail déplaçable en hauteur par une commande ainsi qu'un tambour de stockage de fil ou de câble ; un dispositif de mise sous tension (37, 38) placé devant celui-ci et pouvant être sollicité par un dispositif d'entraînement et une installation de commande - auquel est associé au moins un galet de guidage - ainsi qu'un dispositif de levage déplaçable en hauteur par des commandes et présentant un bras pivotant (17) pour le déplacement en hauteur et latéral d'un galet d'appui et de guidage (18, 19), caractérisée en ce que le dispositif de levage (20) présentant le galet d'appui ou de guidage (18, 19 ; 85, 87 ; 94, 95) et le bras (17) est réalisé avec le dispositif de mise sous tension (37, 38) associé au tambour de stockage (33, 34) avec le galet de guidage (41) - pour le maintien et la tension continue du fil de contact (2) et/ou du fil porteur (3) dans une position de consigne ou en hauteur (a, b) souhaitée, qui reste constante - en vue d'un espacement en hauteur simultané définitif, avec une fixation du fil de contact (2) et/ou du fil porteur (3) au support de caténaire (52) respectif effectuée par un opérateur sur la plate-forme de travail.

2. Machine selon la revendication 1, caractérisée en ce que le galet de support et de guidage (18, 19 ; 85, 87 ; 94, 95) relié au bras (17) ainsi que le galet de guidage (41) associé au dispositif de mise sous tension (37, 38) et réalisé sous forme de poulie de renvoi est disposée en vue d'un enroulement ou déroulement toujours essentiellement vertical - indépendant notamment du pivotement latéral du dispositif de levage (20) - du fil porteur (3) ou du fil de contact (2) relativement à leur axe de galet tournant (25, 26, 65).

3. Machine selon la revendication 1 et 2, caractérisée en ce que le galet de support et de guidage (18, 19 ; 85, 87 ; 94, 95) peut être sollicité pour le support, le guidage et le renvoi continu du fil de contact (2) ou du fil porteur (3) dans la position en hauteur ou de consigne restant constante (a, b) par les commandes du dispositif de levage (20), et qu'il est monté pivotant au bras (17), notamment autour d'un axe vertical (27), en particulier lors de l'allure latérale en forme de zigzag du fil ou câble - en vue du centrage ou du redressement essentiellement automatique dans la direction longitudinale du fil ou du câble.

4. Machine selon la revendication 1 et 2, caractérisée en ce que la poulie de renvoi (41) placée devant ou associée au tambour de fil ou de câble (33, 34) et au dispositif de mise sous tension (37, 38) est prévue dans la zone en dessous du galet de support et de guidage (18, 19), et qu'elle est montée pivotante au châssis de machine (10) sur un axe (39) s'étendant transversalement à son axe de poulie de renvoi (65) dans la direction longitudinale de la machine.

5. Machine selon l'une des revendications 1 à 4, caractérisée en ce que le galet de support et de guidage (18, 19) réalisé notamment à chaque fois avec une rainure de guidage (72) et la poulie de renvoi de fil ou de câble (41) ont un diamètre de préférence de même grandeur et sont réalisés pour un renvoi d'au moins 90° des fils relativement rigides en flexion, selon la mesure de la section transversale du fil, pour avoir un diamètre minimal, de préférence d'au moins 1m.

6. Machine selon l'une des revendications 1 à 5, caractérisée en ce qu'il est prévu simplement un galet de support et de guidage (18 ou 19) pour le fil de contact (2) ou pour le fil porteur (3) qui est logé conjointement avec son axe de galet (25, 26) à un organe de support (28) relié pivotant au bras (17) par l'articulation (79) présentant simplement l'axe vertical (27) en vue du centrage ou réglage essentiellement automatique à la position de consigne relativement à la direction suivant laquelle s'étend le fil ou le câble.

7. Machine selon la revendication 6, caractérisée en ce que le galet de support et de guidage (18,19) est monté pivotant par son axe de galet (25, 26) à la zone extrême de l'organe de support (28) pouvant tourner avec le bras (17) sur l'axe vertical (27) en vue d'un pivotement de tout côté en plus autour d'un axe de pivotement (29, 30) s'étendant perpendiculairement ou essentiellement parallèlement à la direction du fil ou du câble par un support de galet (31).

8. Machine selon l'une des revendications 1 à 7, caractérisée en ce que la poulie de renvoi de fil ou de câble (41) constitue avec une deuxième poulie de renvoi (64) disposée derrière dans la direction longitudinale de la machine, reliée en rotation à celle-ci de préférence par un dispositif d'entraînement à chaîne (40) - qui peut être pivoté par son axe de poulie de renvoi (65) autour du même axe (39) s'étendant dans la direction longitudinale de la machine - un treuil (35, 36) réalisé sous forme de dispositif de mise sous tension (37, 38), et en ce que les deux poulies de renvoi (41, 64) sont réalisées pour que soient enroulées sur celles-ci plusieurs fois le fil porteur (3) ou le fil de contact (2) pour l'établissement mesurable d'un couple de mise sous tension correspondant.

9. Machine selon la revendication 8, caractérisée en ce que les deux poulies de renvoi de fil ou de câble (41, 64) constituant le treuil (35, 36) sont montées par leurs axes de poulie de renvoi (65) conjointement avec le tambour de fil ou de câble (33, 34) déplaçable transversalement parallèlement à l'axe de poulie de renvoi (65) sur un châssis de support (23, 24) du type à bascule - limité de préférence dans le mouvement de rotation latéral par des éléments de ressort ou de butée (77, 78) - qui est monté à rotation au châssis de machine (10) autour de l'axe (39) s'étendant dans la direction longitudinale de la machine.

10. Machine selon la revendication 9, caractérisée en ce que le tambour de fil ou de câble (33, 34) pouvant être sollicité de préférence par un dispositif d'entraînement tournant (66) en vue de l'utilisation lors du déroulement du fil ou du câble est relié à une commande (67) disposée au châssis de support (23, 24) en vue du déplacement transversalement à la direction longitudinale de la machine.

11. Machine selon l'une des revendications 1 à 10, caractérisée en ce qu'il est prévu pour le support et la tension continue du fil de contact (2) et du fil porteur (3) dans la position de consigne (a, b) un galet de support et de guidage (18, 19), respectivement, relié au bras (17) pouvant être pivoté latéralement et en hauteur du dispositif de levage (20) et pouvant être pivoté conjointement par l'articulation (79) pour le fil de contact (2) et le fil porteur (3), et que deux châssis de support (23, 24) sont disposés qui sont reliés à chaque fois à un tambour de fil ou de câble (33, 34) pour le fil de contact (2) et le fil porteur (3), respectivement, et à un treuil propre (35, 36) ou dispositif de mise sous tension (37, 38).

12. Machine selon la revendication 11, caractérisée en ce que les deux galets de support et de guidage (18, 19 ; 85, 87 ; 94, 95) sont disposés suivant un espacement vertical l'un par rapport à l'autre correspondant à la position de consigne (a, b) entre le fil de contact (2 ; 88) et le fil porteur (3 ; 86) sur l'organe de support (28, 84) commun pouvant être pivoté avec le bras (17) par l'articulation (79) et sont montés à rotation, à chaque fois indépendamment l'un de l'autre, par leurs axes de galets (25, 26 ; 89, 90 ; 99) autour d'un axe de pivotement supplémentaire (29, 30 ; 93; 102) s'étendant parallèlement à un plan passant par le fil et le câble de même direction par un support de galet (31; 91, 92; 100, 101) en vue de l'auto-centrage ou l'autre réglage.

13. Machine selon la revendication 12, caractérisée en ce qu'un galet de support et guidage (19; 87 ; 94) - de préférence celui pour le fil de contact (2 ; 88) - est monté relativement à l'autre galet de support et de guidage (18 ; 85 ; 95) en vue d'une autre position de consigne souhaitée sélectivement (a, b), de préférence par une commande (32) reliée à une tringlerie à levier, à une certaine distance réglable l'un par rapport à l'autre à l'organe de support commune (28 ; 84; 96).

14. Machine selon la revendication 12 ou 13, caractérisée en ce que le galet de support et de guidage (18, 19) prévu pour la tension et le guidage, respectivement du fil de contact (2) est disposé, dans le sens de travail de la machine (1), derrière le galet de support et de guidage (18) du fil porteur (3).

15. Machine selon l'une des revendications 1 à 14, caractérisée en ce que le dispositif de levage (20) déplaçable en hauteur avec le bras (17) pouvant être pivoté par des commandes en hauteur et latéralement est réalisé de préférence sous forme de grue pivotante (22) déplaçable en hauteur par des commandes (15) et réglable télescopiquement dans la direction longitudinale de la machine par des commandes (21) et est disposé dans le sens de travail de la machine (1) devant les deux châssis de support (23, 24) avec les tambours de fil ou de câble et les treuils (35, 36) au châssis de machine (10), et est réalisée de façon déplaçable par les commandes avec les deux galets de support et de guidage (18, 19) dans la direction longitudinale de la machine au moins jusqu'à peu près au dessus de la zone médiane entre les deux châssis de support (23, 24).

16. Machine selon la revendication 9 ou 11, caractérisée en ce que notamment chaque châssis de support (23, 24) à bascule, monté au châssis de machine (10) pour le fil de contact (2) et le fil porteur (3) est constitué essentiellement d'une partie de châssis (74) prévue pour le logement du tambour (33, 34) ouvert en bas et d'un support médian (75) faisant suite à celle-ci, prévu pour le logement du treuil (35,36), et en ce que les deux châssis de support (23, 24) sont disposés l'un derrière l'autre par leur support médian (75) dans la direction longitudinale de la machine, et qu'un tambour de réserve de fil ou de câble (42, 43) est prévu de préférence dans la zone médiane de ceux-ci au châssis de machine (10).

17. Machine selon l'une des revendications 1 à 16, caractérisée en ce qu'il est prévu au voisinage du treuil (35, 36) et du galet de support et de guidage associé (18, 19) à chaque fois un détecteur de tension (59, 60) s'appliquant contre le fil de contact et le fil porteur (2, 3) respectivement, relié le cas échéant à un capteur de déplacement pour le maintien ou la détermination mesurable d'une tension de fil ou de câble constante ou sélective qui est relié à l'unité de commande centrale (50) ainsi qu'au dispositif d'entraînement de treuil (45) respectif.

18. Machine selon l'une des revendications 1 à 17, caractérisée en ce que le dispositif de levage (20) réalisé notamment comme grue pivotante (22) déplaçable latéralement et relié à un organe de mesure de hauteur et indicateur (61) est disposé au voisinage d'une des extrémités de châssis de machine (62) - directement derrière la cabine de conduite (11) - et que la cabine d'opérateur déplaçable en hauteur par les commandes (12) et pouvant pivoter latéralement ou la plate-forme de travail réalisée sous forme de nacelle (47) est disposée au voisinage de l'autre extrémité de châssis de machine (63), de préférence à côté d'un emplacement de stockage de matériau (48).

19. Machine selon l'une des revendications 1 à 18, caractérisée en ce que toutes les commandes (9, 12, 15, 16, 21, 45) peuvent être commandées à distance par l'unité de commande centrale (50) présentant de préférence un dispositif indicateur de force de traction numérique (49) qui est prévu dans la nacelle d'opérateur (47) déplaçable en hauteur par les commandes (12) et pouvant pivoter latéralement.

20. Machine selon l'une des revendications 1 à 19, caractérisée en ce qu'il est disposé à la suite de la machine (1) un wagon de superstructure ou à plate-forme mobile de voie ferrée (55) notamment auto-déplaçable avec un châssis de travail déplaçable en hauteur (56) pour le montage ou le démontage et le support de pièces individuelles (57) reliant entre eux ou supportant le fil de contact tendu ou le fil porteur tendu (3), ou des pièces pour la fixation des bras (53) reliés aux supports (52) respectifs.

21. Machine selon l'une des revendications 1 à 20, caractérisée en ce que - pour la réfexion ou transformation de caténaires - on a disposé dans le sens de travail devant la machine (106) réalisée pour la pose et la réception, respectivement, du fil de contact et du fil porteur, une machine (107) réalisée de préférence de la même manière et disposée dans le sens de travail de façon spéculairement symétrique à celle-ci à une certaine distance, chaque machine (106, 107) étant reliée à au moins un véhicule de travail (109, 110) comprenant une plate-forme de travail, (112, 113) déplaçable en longueur et réglable en hauteur dans la direction longitudinale de la machine par une commande (111), respectivement (figure 8).

22. Procédé pour la pose en continu d'une caténaire (4) par fixation sur des bras (53) reliés à des supports de caténaire (52), le fil porteur et le fil de contact (2) étant déroulés de tambours de stockage et sont tendus en appliquant une force de traction souhaitée à l'aide d'un dispositif de mise sous tension autour de galets de support et de guidage (18, 19), caractérisé en ce que le fil porteur (3) et le fil de contact (2) sont amenés, en étant mis sous tension à l'aide des galets de support et de guidage (18, 19) déplaçables en hauteur et latéralement de façon continue, dans leur position en hauteur et latérale de consigne respective, qu'ils sont maintenus sous tension dans celle-ci et sont reliés au bras (53) pour une fixation définitive, à la suite de quoi les galets de support et de guidage (18, 19), en maintenant inchangé leur position en hauteur et pendant que la machine continue son déplacement (1), sont pivotés latéralement conformément à l'allure en forme de zigzag de la caténaire (4) ou sont centrés sur cette allure, et pendant la même opération, le fil de contact tendu (2) avec le fil porteur (3) tendu sont montés définitivement l'un par rapport à l'autre dans cette position de consigne à l'aide d'une voiture de travail (55) attelée également à la machine par les éléments de fixation individuels.
